# EUROPÄISCHE PATENTSCHRIFT

(11) **EP 3 951 191 B1**
(45) Veröffentlichungstag und Bekanntmachung des Hinweises auf die Patenterteilung: **18.12.2024**
(21) Anmeldenummer: 21189124.7
(22) Anmeldetag: 02.08.2021
(51) Int. Cl.: F16B 33/00, F16B 37/04

(54) **BESCHLAGTEIL**
FITTING PART
ÉLÉMENT FERRURE

(30) Priorität: 03.08.2020 DE 102020209729; 26.05.2021 DE 102021205352
(43) Veröffentlichungstag der Anmeldung: 09.02.2022
(73) Patentinhaber: SACS Aerospace GmbH, 72186 Empfingen (DE)
(72) Erfinder: Rapp, Andreas, 72175 Dornhan (DE); Blank, Eugen, 78662 Bösingen (DE); Moser, Roland, 72364 Obernheim (DE)
(74) Vertreter: Patentanwälte Magenbauer & Kollegen Partnerschaft mbB

(56) Entgegenhaltungen:
- EP-B1- 0 696 686
- EP-B1- 2 655 902
- WO-A1-2020/055624
- DE-A1- 102012 019 037
- DE-B4- 102004 045 675
- DE-C1- 4 412 431
- KR-B1- 100 843 934
- US-A- 2 820 499
- US-B1- 6 183 180

## Beschreibung

Die Erfindung betrifft ein Beschlagteil zur Festlegung eines Gewindeelements an einem Wandabschnitt, mit einem Grundkörper, der von einer Ausnehmung durchsetzt ist, die längs einer Mittelachse erstreckt ist, mit einem Spannring, der drehbeweglich an einer Außenoberfläche, insbesondere an einem koaxial zur Mittelachse angeordneten Hülsenabschnitt, des Grundkörpers angebracht ist, wobei der Außenoberfläche, insbesondere dem Hülsenabschnitt, eine erste Steuernocke zugeordnet ist und/oder wobei dem Spannring eine zweite Steuernocke zugeordnet ist, die bei einer Drehbewegung des Spannrings gegenüber dem Grundkörper für eine elastische oder elastische und plastische Durchmesserveränderung des Spannrings ausgebildet ist.

Aus der DE 10 2004 045 675 B1 ist ein Spannmittel bekannt, das ein Nutzteil und ein Klemmteil umfasst, welche miteinander verbindbar sind, wobei an dem Nutzteil oder dem Klemmteil Nocken angeordnet sind, durch welche das Nutzteil und das Klemmteil miteinander verspannt werden.

Aus der EP 2 655 902 B1 ist eine Käfigmutter mit Haltevorrichtung und ein Verfahren zur Herstellung derselben bekannt. Die Käfigmutter weist eine Mutter mit einem radial überstehenden eckigen Flansch und einer gewindehülsenartigen Aufnahme für eine Schraube auf. Eine Halterung mit einer Durchtrittsöffnung, die von der hülsenartigen Schraubenaufnahme durchsetzt ist, greift bügelartig über den eckigen Flansch der Mutter. Ein Haltekragen, der die hülsenartige Schraubenaufnahme der Mutter umschließt, stützt sich auf der Halterung im Bereich der Durchtrittsöffnung ab. Der Haltekragen ist einstückig und weist die Durchtrittsöffnung der Halterung beidseitig abdeckende erste und zweite Abdeckelemente auf. Die Abdeckelemente sind über eine an der Schraubenaufnahme konzentrisch anliegende Verbindungsbuchse mechanisch verbunden. Die Verbindungsbuchse weist einen radialen Abstand von der Durchtrittsöffnung auf.

Aus der EP 0 696 686 B1 ist bekannt, dass ein rohrförmiger Schaft an einem Ende eines Mutternkäfigs in eine Öffnung in einer Wand eingesetzt und aufgeweitet wird, um ihn mit der Wand zu verbinden und das die Öffnung umgebende Wandmaterial zur Verbesserung der Ermüdungsfestigkeit kalt zu bearbeiten. Der Mutternkäfig umfasst einen Käfigbodenbereich zur Aufnahme des Mittelteils einer Mutter. Ein Endabschnitt des Mutternbodens wird in eine Buchse eingesetzt. Ein zweiter Endabschnitt des Mutternsockels wird axial in einen Kanal geschoben. Dann wird ein Sprengring installiert und so bewegt, dass ein geschlossener Teil über dem Endteil der Mutternbasis liegt. Die Buchse und der Kanal halten den Mutternsockel gegen Drehung im Mutternkäfig fest. Der Kanal und ein Teil des Sprengrings, der den Kanal und die axialen Begrenzungen des Sockels verschließt, verhindern, dass sich der Mutternsockel axial aus dem Mutternkäfig herausbewegt.

Die DE 10 2012 019 037 A1 offenbart eine Käfigmutteranordnung zur Anordnung an einer Durchgangsöffnung eines Trägerbauteils mit einem, eine Mutter aufnehmenden Käfigabschnitt und mit einem hiermit verbundenen Einsatz, welcher in einer die Durchgangsöffnung durchsetzenden Einbaulage am Trägerbauteil unter Bildung einer mit der Durchgangsöffnung formschlüssigen Verbindung mechanisch deformierbar ist.

Die US 6 183 180 B1 offenbart einen rohrförmigen Schaft, der an einem Ende einer Mutterhalterung in eine Öffnung in einer Wand eingeführt und aufgeweitet wird, um ihn mit der Wand zu verbinden. Ein ringförmiger Kragen oder Raum berührt die Wand und umgibt dort unmittelbar die Öffnung. Eine aufsteckbare Mutter wird auf eine Mutteraufnahme aufgeklemmt, die am Ende außerhalb des Kragens liegt. Durch eine Druckbewegung an der Aufsteckmutter werden die Rastlaschen an diametral gegenüberliegenden Randabschnitten der Mutteraufnahme vorbei bewegt und in Positionen unterhalb der Randabschnitte des Nussrezeptors gebracht. Wenn die Mitnehmer so positioniert sind, halten sie die Aufsteckmutter auf der Mutteraufnahme. Bei der Aufsteckmutter kann es sich um eine abgedichtete Mutter handeln. Wenn dies der Fall ist, werden die Rastlaschen so positioniert, dass, wenn sie unter Abschnitte der Randabschnitte der Mutteraufnahme eingreifen, ein Dichtungsring an der Basis der Aufsteckmutter zusammengedrückt wird. Dieses Zusammendrücken des Dichtungsrings bewirkt, dass die Aufsteckmutter abgedichtet wird, bevor eine Schraube mit der Aufsteckmutter verbunden wird.

Aus der US 2 820 499 A ist eine schwimmende Ankermutter für die Blindbefestigung von konischen Teilen bekannt.

Aus der KR 100 843 934 B1 ist ein winkelverstellbarer Einsatz bekannt, der dafür sorgt, dass eine Stockschraube immer senkrecht zur Bodenoberfläche steht, selbst wenn sie auf einer Deckplatte oder einer geneigten Oberfläche installiert wird. Der winkelverstellbare Einsatz besteht aus einer Basis, einem Gehäuse, einer kugelförmigen Überwurfmutter, einer Kappe und einem vibrationsfesten Material. Die Basis besteht aus einer kreisförmigen Befestigungsplatte, die in regelmäßigen Abständen mit einer Vielzahl von Befestigungslöchern versehen ist, einem konischen Einführvorsprung, der in der Mitte der oberen Oberfläche der Befestigungsplatte ausgebildet ist, und einem Vorsprung, der eine Drehung verhindert, die auf der Oberseite des Einführvorsprungs auftritt. Das Gehäuse besteht aus einem Einführrohr, das den Drehverhinderungsvorsprung und den Einführvorsprung enthält, und einem zylinderförmigen Körper, der in einem oberen Ende des Einführrohrs ausgebildet ist. Die Kupplungsmutter wird in das Gehäuse eingeführt, so dass das untere Ende eines Kupplungslochs in den drehverhindernden Vorsprung eingeführt wird. Die Kappe wird durch einen zylindrischen Kupplungsvorsprung in das obere Ende des Gehäuses eingeführt. Das vibrationsfeste Material wird zwischen dem unteren Ende des Gehäuses und dem unteren Ende der Überwurfmutter eingebaut.

Aus der WO 2020/055624 A1 ist ein Einbausystem für ein Kastenprofil für ein Kraftfahrzeug bekannt. Das Einbausystem weist mindestens eine Trägerleiste, die in das Kastenprofil einschiebbar ist, und mindestens ein Mutternelement zur Vorpositionierung auf der Trägerleiste auf, wobei das Mutternelement zur lösbaren Vorpositionierung auf der Trägerleiste ausgebildet ist.

Aus der DE 44 12 431 C1 ist eine Vorrichtung bekannt, die zur abstandsgerechten Verbindung von mit Einbauöffnungen versehenen Bauteilen mittels eines Distanzstücks und einer Verbindungsschraube sowie einem Gegenlager dient. Das Distanzstück wird durch einen an einem Bauteil befestigbaren Haltekörper und einen diesem gegenüberliegenden, relativ zur Längsachse der Verbindungsschraube verschiebbaren Stützkörper gebildet. Der Haltekörper ist als U-Clip an einem Ende mit Befestigungsfüßen versehen und verfügt über ein Innengewinde, in das der Haltekörper mit einem entsprechenden Gewinde eingreifen kann. Der Stützkörper ist mit einer Durchgangsbohrung versehen.

Die Aufgabe der Erfindung besteht darin, ein Beschlagteil bereitzustellen, das in vielfältiger Weise eingesetzt werden kann.

Diese Aufgabe wird für ein Beschlagteil der eingangs genannten Art mit den Merkmalen des Anspruchs 1 gelöst. Hierbei ist vorgesehen, dass ein Koppelteil beweglich in der Ausnehmung aufgenommen ist und mit dem Grundkörper eine spielbehaftete Drehkupplung für eine Übertragung eines Drehmoments zwischen dem Koppelteil und dem Grundkörper um die Mittelachse bildet, wobei ein Gewindeabschnitt des Koppelteils eine Gewindeachse bestimmt, die mit einer variablen Orientierung in einem vorgebbaren Winkelintervall und/oder in einem vorgebbaren Abstandsintervall zur Mittelachse ausgerichtet ist.

Das Beschlagteil wird dazu genutzt, in einfacher Weise eine weitere Komponente wie beispielsweise ein Verkleidungsteil zuverlässig an dem Wandabschnitt festzulegen. Dabei wird davon ausgegangen, dass der Wandabschnitt mit einer Ausnehmung versehen ist, die zumindest eine bereichsweise Aufnahme des Spannrings des Beschlagteils ermöglicht, wobei eine Festlegung des Beschlagteils am Wandabschnitt dadurch erfolgt, dass eine Relativbewegung zwischen dem Grundkörper und dem Spannring eingeleitet wird, wodurch eine zumindest elastische, gegebenenfalls auch elastische und plastische Deformation bei der Aufweitung des Spannrings aufgrund der Wechselwirkung der wenigstens einen ersten Steuernocke des Hülsenabschnitts des Grundkörpers mit dem Spannring bzw. der zweiten Steuernocke des Spannrings mit dem Hülsenabschnitt des Grundkörpers hervorgerufen wird. Hierdurch wird eine kraftschlüssige Kopplung des Beschlagteils mit dem Wandabschnitt ermöglicht.

Für die Verbindung der festzulegenden Komponente, bei der es sich beispielsweise um ein Verkleidungsteil handeln kann, mit dem Beschlagteil ist an einem dem Beschlagteil zugehörigen Koppelteil ein Gewindeabschnitt ausgebildet, der insbesondere als Stehbolzen oder als Gewindebohrung verwirklicht sein kann. Dabei sind der Grundkörper mit der darin vorgesehenen Ausnehmung und das Koppelteil derart aufeinander abgestimmt, dass bei einem Schraubvorgang, mit dem beispielsweise eine Mutter oder eine Schraube an dem Gewindeabschnitt des Koppelteils festgelegt werden soll, um die weitere Komponente zu befestigen, eine Drehmomenteinleitung um die Mittelachse des Grundkörpers vom Koppelteil auf den Grundkörper erfolgt und aufgrund dieses Drehmoments die gewünschte rotatorische Relativbewegung zwischen den Grundkörper und dem Spannring hervorgerufen wird, um die elastische oder elastische und plastische Aufweitung des Spannrings zu bewirken. Der Gewindeabschnitt kann einen oder mehrere Gewindegänge umfassen und kann beispielsweise als metrisches Gewinde oder als Zollgewinde ausgebildet sein. Es kann auch vorgesehen sein, dass der Gewindegang des Gewindeabschnitt über einen Winkelbereich erstreckt ist, der kleiner als 360 Grad beträgt, womit eine Verriegelung zwischen dem Koppelteil und einem korrespondierenden Verriegelungselement in der Art einer Bajonettverbindung verwirklicht werden kann.

Prinzipiell ist es zwar wünschenswert, dass die Ausnehmung im Wandabschnitt, die zur Aufnahme zumindest eines Bereichs des Spannrings des Beschlagteils dienen soll, derart in dem Wandabschnitt eingebracht ist, dass eine unproblematische Festlegung der festzulegenden Komponente gewährleistet ist. Aufgrund von Fertigungstoleranzen, wie sie sowohl für den Wandabschnitt und die darin eingebrachte Ausnehmungen als auch für die festzulegenden Komponente zu Grunde gelegt werden müssen, kann der Fall eintreten, dass ein Befestigungsbereich der festzulegenden Komponente, der beispielsweise als Bohrung zur Aufnahme einer Schraube ausgebildet sein kann, die zum Eingriff in den Gewindeabschnitt des Koppelteils genutzt werden soll, nicht in optimaler Weise ausgerichtet ist. Dementsprechend muss entweder eine Nacharbeit an der festzulegenden Komponente in Kauf genommen werden, um vorhandene Toleranzen auszugleichen oder die festzulegenden Komponente wird unter einer gewissen, üblicherweise unerwünschten, Vorspannung mittels des Beschlagteils am Wandabschnitt festgelegt. Um den Einfluss derartiger, kaum zu vermeidender, Fertigungstoleranzen zu reduzieren ist vorgesehen, dass das Koppelteil beweglich in der Ausnehmung des Grundkörpers aufgenommen ist, so dass zumindest in gewissen Grenzen ein Toleranzausgleich für Positionstoleranzen gewährleistet ist. Um trotz der Beweglichkeit des Koppelteils in der Ausnehmung des Grundkörpers die gewünschte kraftschlüssige Festlegung des Beschlagteils am Wandabschnitt zu ermöglichen, bilden die Ausnehmung des Grundkörpers und das Koppelteil eine spielbehaftete Drehkupplung, die zwar einerseits eine gewisse Anpassung der räumlichen Ausrichtung des Koppelteils relativ zum Grundkörper und damit einen Ausgleich von Toleranzen ermöglicht, andererseits jedoch eine Drehmomentübertragung zwischen einem Befestigungsmittel für die festzulegende Komponente wie eine Schraube oder eine Mutter, den Gewindeabschnitt des Koppelteils und dem Grundkörper zu ermöglichen, um hierdurch die Relativbewegung des Grundkörpers gegenüber dem Spannring und die daraus resultierende elastische oder elastische und plastische Aufweitung des Spannrings sicherzustellen.

Hierbei ist vorgesehen, dass das Koppelteil und die Ausnehmung des Grundkörpers derart aneinander angepasst sind, dass eine Gewindeachse des Koppelteils, die vom Gewindeabschnitt bestimmt wird, innerhalb eines durch die Geometrie der Ausnehmung und die Geometrie des Koppelteils bestimmten Bewegungsraums ortsveränderlich ist. Beispielhaft ist vorgesehen, dass das Koppelteil gegenüber dem Grundkörper um die Mittelachse in einem vorgebbaren Winkelbereich, beispielsweise in einem Bereich von +/- 20 Grad verdreht werden kann und jeweils bei Erreichen einer Intervallgrenze dieses Winkelbereichs eine Blockierstellung gegenüber dem Grundkörper einnimmt, in der die gewünschte Drehmomentübertragung um die Mittelachse zwischen dem Koppelteil und dem Grundkörper vorgenommen werden kann. In ähnlicher Weise kann vorgesehen sein, dass das Koppelteil innerhalb eines gewissen, vorgebbaren Intervalls linearbeweglich in der Ausnehmung aufgenommen ist. Dabei kann eine Linearbewegung des Koppelteils gegenüber dem Grundkörper sowohl in Raumrichtungen parallel zur Mittelachse als auch in Raumrichtungen quer zur Mittelachse vorgesehen sein. Ergänzend oder alternativ kann vorgesehen sein, dass das Koppelteil innerhalb eines gewissen, vorgebbaren Intervalls kippbeweglich in der Ausnehmung aufgenommen ist. Vorzugsweise finden Kippbewegungen des Koppelteils gegenüber dem Grundkörper um Kippachsen statt, die quer zur Mittelachse ausgerichtet sind. Wie auch für die Drehbewegung des Koppelteils um die Mittelachse sind auch für Linearbewegungen und/oder Kippbewegungen des Koppelteils gegenüber dem Grundkörper jeweils maximale Auslenkungen vorgesehen. Bei Linearbewegungen wird davon ausgegangen, dass die Gewindeachse des Koppelteils einen vorgebbaren maximalen Abstand gegenüber der Mittelachse nicht überschreiten kann. Bei Kippbewegungen des Koppelteils wird davon ausgegangen, dass die Gewindeachse des Koppelteils einen vorgebbaren maximalen Winkel gegenüber der Mittelachse nicht überschreiten kann.

Ausnehmung und Koppelteil sind derart aufeinander angepasst, dass das Koppelteil in einer Freigabestellung mit wenigstens einem geometrisch begrenzten Freiheitsgrad der Bewegung kippbeweglich und/oder linearbeweglich in der Ausnehmung aufgenommen ist und in einer Funktionsstellung für eine Drehmomentübertragung zwischen dem insbesondere als Innengewinde ausgebildeten Gewindeabschnitt und dem Grundkörper ausgebildet ist. Hierbei wird davon ausgegangen, dass in der Freigabestellung keine Drehmomentübertragung zwischen dem Koppelteil und dem Grundkörper stattfindet und eine Relativbewegung des Koppelteils gegenüber dem Grundkörper aufgrund der geometrischen Ausgestaltung des Koppelteils und der Ausnehmung im Grundkörper mit einem begrenzten Bewegungsspielraum stattfinden kann. In Abhängigkeit von der Geometrie des Koppelteils und der Geometrie der Ausnehmung im Grundkörper kann eine Relativbewegung zwischen Koppelteil und Grundkörper ausschließlich linear oder ausschließlich rotatorisch oder als lineare und rotatorische Kombination durchgeführt werden. Bei einer Einleitung eines Drehmoments auf den Gewindeabschnitt des Koppelteils, wie dies beispielsweise zu Beginn eines Einschraubvorgangs für eine Schraube in eine Gewindebohrung des Koppelteils oder zu Beginn eines Aufschraubvorgangs für eine Mutter auf einen Stehbolzen des Koppelteils erfolgen kann, findet ein Übergang zwischen der Freigabestellung und der Funktionsstellung statt, wobei dieser Übergang typischerweise durch eine Rotationsbewegung des Koppelteils gegenüber dem Grundkörper um die Mittelachse ausgeführt wird. In der Funktionsstellung ist aufgrund der Geometrie des Koppelteils und der Geometrie der Ausnehmung im Grundkörper zumindest bezüglich einer Drehmomentübertragung um die Mittelachse eine formschlüssige Kopplung zwischen Koppelteil und Grundkörper gewährleistet, so dass nunmehr eine Drehmomentübertragung vom Koppelteil auf den Grundkörper erfolgen kann, die dann auch zu der gewünschten Relativbewegung zwischen Grundkörper und Spannring führt. In Abhängigkeit von der Ausgestaltung der Geometrien des Koppelteils und der Ausnehmung findet beim Übergang von der Freigabestellung in die Rotationsstellung gegebenenfalls eine gewisse Zentrierung des Koppelteils gegenüber dem Grundkörper statt, dies ist jedoch für die Funktionsweise des Beschlagteils weder erforderlich noch zwingend.

Alternativ kann vorgesehen sein, dass die Relativbewegung zwischen dem Grundkörper und dem Spannring durch eine unmittelbare Drehmomenteinleitung auf den Grundkörper, beispielsweise mittels eines Gabelschlüssel, der an geeigneten Schlüsselflächen des Grundkörpers angesetzt, erfolgt und ein Einschraubvorgang für die Schraube, mit der die zu befestigende Komponente festgelegt werden soll, in das Koppelteil erst zu einem späteren Zeitpunkt vorgenommen wird.

Erfindungsgemäß bestimmt ein Teilbereich einer Außenoberfläche des Koppelteils einen ersten Profilabschnitt, wobei ein Teilbereich einer Innenoberfläche der Ausnehmung einen zweiten Profilabschnitt bestimmt, wobei der erste Profilabschnitt mit dem zweiten Profilabschnitt in einer Funktionsstellung eine spielbehaftete Drehkupplung für eine Drehmomentübertragung zwischen dem Koppelteil und dem Grundkörper bildet und in einer Freigabestellung für eine Relativbewegung zwischen dem Koppelteil und dem Grundkörper mit wenigstens einem geometrisch begrenzten rotatorischen Freiheitsgrad und/oder wenigstens einem geometrisch begrenzten linearen Freiheitsgrad der Bewegung ausgebildet ist.

Zweckmäßig ist es, wenn das Koppelteil, insbesondere abschnittsweise, in einer quer zur Mittelachse ausgerichteten Querschnittsebene einen ersten Querschnitt aufweist und dass die Ausnehmung, insbesondere abschnittsweise, in der Querschnittsebene einen zweiten Querschnitt aufweist, wobei der erste Querschnitt und der zweite Querschnitt geometrisch ähnlich ausgebildet sind, insbesondere der zweite Querschnitt durch Streckung aus dem ersten Querschnitt hervorgeht. Vorzugsweise sind ein erster Profilabschnitt des Koppelteils und ein zweiter Profilabschnitt der Ausnehmung derart ausgebildet, dass sie bei einer parallelen, insbesondere koaxialen Ausrichtung der Gewindeachse und der Mittelachse in einer gemeinsamen Querschnittsebene geometrisch ähnliche Querschnitte aufweisen. Eine geometrische Ähnlichkeit liegt beispielsweise dann vor, wenn der erste Querschnitt durch eine Streckung, insbesondere eine zentrierte Streckung, in den zweiten Querschnitt überführt werden kann. Ferner ist für die Übertragung eines Drehmoments zwischen dem Koppelteil und dem Grundkörper vorzusehen, dass eine maximale Erstreckung des ersten Querschnitts des Koppelteils bereichsweise größer als eine minimale Erstreckung des zweiten Querschnitts der Ausnehmung ist, da hierdurch eine formschlüssig wirkende Drehmomentübertragung zwischen dem Koppelteil und dem Grundkörper ermöglicht wird.

Bevorzugt ist vorgesehen, dass der Spannring einen quer zur Mittelachse in radialer Richtung abragenden Ausleger umfasst, der endseitig mit einem längs der Mittelachse erstreckten Stützdorn versehen ist. Die Aufgabe des Auslegers und des daran festgelegten Stützdorns besteht darin, eine Drehmomentabstützung für den Spannring gegenüber dem Wandabschnitt zu gewährleisten, an dem das Beschlagteil festgelegt werden soll. Ohne den Ausleger und den daran angebrachten Stützdorn ist für eine Festlegung des Beschlagteils am Wandabschnitt ein Reibschluss zwischen einer Außenumfangsfläche des Spannrings und einer Innenumfangsfläche der Ausnehmung, die der Spannring zumindest bereichsweise eingreift, erforderlich, um bei einer Einleitung eines Drehmoments auf das Koppelteil, die zu einer Drehmomentübertragung vom Koppelteil auf den Grundkörper und dadurch zu einer Relativbewegung zwischen Grundkörper und Spannring führen soll, die erforderliche Drehmomentabstützung zwischen Spannring und Wandabschnitt zu gewährleisten. Durch den Ausleger und den daran ausgebildeten Stützdorn, der in eine Ausnehmung im Wandabschnitt eingreift, die benachbart zu der für die Aufnahme des Spannrings im Wandabschnitt ausgebildete Ausnehmung angeordnet ist, wird eine direkte formschlüssige Drehmomentabstützung für den Spannring ermöglicht. Dementsprechend sind die Toleranzanforderungen an die Ausnehmung im Wandabschnitt, die zur Aufnahme des Spannrings ausgebildet ist, geringer. Bei einer alternativen Ausgestaltung der Erfindung ist vorgesehen, dass die Außenumfangsfläche des Spannrings unrund ausgebildet ist und die Ausnehmung im Wandabschnitt eine zur Außenumfangsfläche des Spannrings korrespondierende Geometrie aufweist, womit ebenfalls eine formschlüssige Aufnahme des Spannrings im Wandabschnitt im Hinblick auf eine Drehmomenteinleitung um die Mittelachse des Beschlagteils gewährleistet werden kann.

Bei einer Weiterbildung der Erfindung ist vorgesehen, dass die erste Steuernocke mit einer keilförmigen Profilierung an einer bogenförmigen, insbesondere kreiszylindrischen, Außenfläche des Hülsenabschnitts ausgebildet ist, die in radialer Richtung nach außen abragt und dass der Spannring mit wenigstens einer Ausnehmung versehen ist, die in einer Freigabestellung des Spannrings gegenüber dem Grundkörper zur Aufnahme der ersten Steuernocke ausgebildet ist. Die keilförmige Profilierung der Steuernocke ist in der quer zur Mittelachse ausgerichteten Querschnittsebene erkennbar und zeichnet sich dadurch aus, dass über einen Abschnitt des Umfangs der Außenfläche des Hülsenabschnitts entlang einer Umfangsrichtung der Außenfläche eine, vorzugsweise lineare, Vergrößerung eines Abstands zwischen der Mittelachse des Hülsenabschnitts und dem jeweiligen Abschnitt der Außenfläche des Hülsenabschnitts vorliegt. Durch diese Gestaltung der Steuernocke wird bei einer Relativbewegung zwischen Grundkörper und Spannring eine zumindest weitestgehend lineare Zunahme der elastischen oder elastischen und plastischen Deformation des Spannrings aufgrund der Wechselwirkung der ersten Steuernocke mit der Innenoberfläche des Spannrings gewährleistet. Durch diese vorzugsweise lineare Zunahme der elastischen oder elastischen und plastischen Deformation des Spannrings wird ein im Wesentlichen proportionaler Zusammenhang zwischen einem Schwenkwinkel zwischen Grundkörper und Spannring und der elastischen oder elastischen und plastischen Deformation des Spannrings erzielt. Ferner ist vorgesehen, dass die am Hülsenabschnitts des Grundkörpers angeordnete erste Steuernocke in der Freigabestellung des Spannrings gegenüber dem Grundkörper in eine Ausnehmung des Spannrings hineinragt, die vorzugsweise derart beschaffen ist, dass der Spannring in der Freigabestellung keine wesentliche elastische und somit auch keine plastische Deformation aufgrund der Wechselwirkung mit der ersten Steuernocke aufweist.

In weiterer Ausgestaltung der Erfindung ist vorgesehen, dass das Koppelteil einen, insbesondere als Planparallelplatte ausgebildeten, Führungsabschnitt aufweist, der zwischen einer ersten Axialfläche des Grundkörpers und einer zweiten Axialfläche des Grundkörpers, die gegenüberliegend, insbesondere parallel, zur ersten Axialfläche ausgebildet ist, aufgenommen ist, um eine Begrenzung von Relativbewegungen des Koppelteils gegenüber dem Grundkörper auf lineare Bewegungen in einer quer zur Mittelachse ausgerichteten Bewegungsebene zu gewährleisten. Aufgrund der Wechselwirkung des Führungsabschnitts, der am Koppelteil ausgebildet ist, und der einander gegenüberliegend ausgebildeten ersten und zweiten Axialflächen des Grundkörpers wird ein Formschluss zwischen Koppelteil und Grundkörper im Hinblick auf Kippbewegungen erzielt, deren Bewegungsachsen quer zur Mittelachse des Grundkörpers ausgerichtet sind. Dementsprechend kann das Koppelteil nur Relativbewegungen in einer Bewegungsebene ausführen, die quer zur Mittelachse ausgerichtet ist. Ergänzend kann vorgesehen sein, dass der Führungsabschnitt des Koppelteils und einen zwischen den beiden Axialflächen des Grundkörpers ausgebildeter Bereich der Ausnehmung in einer quer zur Mittelachse ausgerichteten Querschnittsebene derart profiliert sind, dass eine zusätzliche Beschränkung der Relativbeweglichkeit zwischen Koppelteil und Grundkörper auf genau eine Raumrichtung oder einen vorgebbaren Bewegungskorridor innerhalb der Querschnittsebene vorgegeben wird.

Zweckmäßig ist es, wenn das Koppelteil einen ersten Koppelkörper umfasst, der kippbeweglich um wenigstens eine, insbesondere um zwei senkrecht zueinander, quer zur Mittelachse des Grundkörpers ausgerichtete Kippachsen in der Ausnehmung aufgenommen ist, und einen zweiten Koppelkörper umfasst, der mit dem Gewindeabschnitt versehen ist und der linearbeweglich am ersten Koppelkörper gelagert ist. Somit erfüllt der erste Koppelkörper die Aufgabe, eine Winkelausrichtung der Gewindeachse relativ zur Mittelachse zumindest innerhalb eines vorgebbaren Winkelbereichs zu ermöglichen. Beispielhaft kann der Winkelbereich, innerhalb dem der erste Koppelkörper relativ zum Grundkörper ausgerichtet werden kann, als Kegel oder Kegelabschnitt beschrieben werden, wobei die Mittelachse des Grundkörpers auch die Mittelachse des Kegels oder Kegelabschnitts bildet und der Kegelmantel oder Kegelabschnittsmantel durch die möglichen Ausrichtung der Gewindeachse bestimmt wird. Die Aufgabe des zweiten Koppelteils ist es, eine begrenzte Linearbewegung gegenüber dem ersten Koppelteil zu ermöglichen, um neben einer Winkelausrichtung für die Gewindeachse auch eine lineare Anpassung der Position der Gewindeachse zu ermöglichen. Hierzu ist insbesondere vorgesehen, dass der zweite Koppelkörper einen Führungsabschnitt umfasst, der in einer korrespondierend ausgebildeten Ausnehmung im ersten Koppelkörper aufgenommen ist, wodurch die gewünschte Begrenzung der Linearbeweglichkeit zwischen ersten und zweiten Koppelkörper erzielt wird. Ferner sind der Führungsabschnitt des zweiten Koppelkörper und die Ausnehmung im ersten Koppelkörper wie auch der erste Koppelkörper im Verhältnis zur Ausnehmung im Grundkörper für eine Übertragung eines Drehmoments ausgebildet, das durch Wechselwirkung eines Gewindeelements, insbesondere einer Schraube oder einer Mutter mit dem Gewindeabschnitt im zweiten Koppelteil über das erste Koppelteil und dem Grundkörper bis zum Spannring und dem Wandabschnitt übertragen werden soll.

Vorteilhaft ist es, wenn die Ausnehmung abschnittsweise einen kleineren Querschnitt als das Koppelteil aufweist und ein damit gebildeter Hinterschnitt für das Koppelteil eine formschlüssige Kraftübertragung zwischen dem Koppelteil und dem Grundkörper längs der Mittelachse gewährleistet. Hierdurch wird die axiale Kraftübertragung zwischen dem Koppelteil und dem Grundkörper längs der Mittelachse gewährleistet.

Bei einer alternativen Ausführungsform für das Beschlagteil ist vorgesehen, dass der Spannring die Außenoberfläche des Grundkörpers zumindest nahezu vollständig, insbesondere vollständig, umgibt. Diese Ausführungsform des Beschlagteils kann in Werkstücken montiert werden, die lediglich mit Sacklöchern versehen sind und daher nur einen einseitigen Zugriff auf das Beschlagteil ermöglichen. Die Aufbringung des Drehmoments zur elastischen Deformation des Spannrings, der die Außenoberfläche des Grundkörpers weitgehend oder vollständig überdeckt, erfolgt durch ein Drehmoment, das entweder über ein geeignetes Befestigungselement wie beispielsweise eine Schraube in das Koppelelement eingeleitet wird oder über ein Werkzeug, das am Grundkörper drehmomentübertragend angesetzt werden kann. Eine Abstützung dieses Drehmoments kann dadurch erfolgen, dass der Spannring bereits bei der Montage in die Ausnehmung bzw. das Sackloch in einer Weise reibschlüssig mit dem Werkstück in Kontakt tritt, dass eine ausreichende Drehmomentübertragung zwischen dem Beschlagteil und dem Werkstück gewährleistet ist.

Ergänzend oder alternativ kann vorgesehen sein, dass ein geeignetes Werkzeug am Spannring angesetzt wird, um die gewünschte Drehmomentabstützung ohne Einbeziehung des Werkstücks verwirklichen zu können. Dementsprechend kann vorgesehen sein, dass an einer in Axialrichtung ausgerichteten Stirnfläche des Grundkörpers und/oder an einer in Axialrichtung ausgerichteten Stirnfläche des Spannrings eine Werkzeugkupplung zur Aufnahme eines Werkzeugs ausgebildet ist.

Im einfachsten Fall wird das Beschlagteil jedoch, möglicherweise unter Zuhilfenahme eines Hammers oder rein manuell oder maschinell, in die Ausnehmung bzw. das Sackloch oder auch in ein Durchgangsloch des Werkstücks eingesetzt und anschließend erfolgt unter Zuhilfenahme weiterer Werkzeuge allein durch Verschrauben der zu befestigenden Komponente über die hierzu verwendete Schraube die Drehmomenteinleitung, die zur gewünschten Relativbewegung zwischen Grundkörper und Spannring führt, um die kraftschlüssige Festlegung des Beschlagelements im Werkstück zu gewährleisten. In Abhängigkeit von der Materialauswahl für den Werkstoff, aus dem das Werkstück beschaffen ist, in das das Beschlagteil eingesetzt werden soll, kann eine Außenfläche des Spannrings mit einer Profilierung, insbesondere mit Längsrillen oder einer Rändelung und/oder mit einer reibungserhöhenden Beschichtung, beispielsweise einer Gummibeschichtung, versehen sein.

In weiterer Ausgestaltung der Erfindung ist vorgesehen, dass die Außenoberfläche des Grundkörpers und eine Innenoberfläche des Spannrings jeweils konusabschnittsförmig ausgebildet sind. Vorzugsweise ist vorgesehen, dass sich die beiden konusabschnittsförmig ausgebildeten Geometrien des Grundkörpers und des Spannrings in Richtung einer Mündungsöffnung der Ausnehmung im Grundkörper verjüngen. Hierdurch wird bei Einleitung von Zugkräften auf das Beschlagteil eine zusätzliche Keilwirkung zwischen dem Grundkörper und dem Spannring hervorgerufen, die zu einer Verbesserung der kraftschlüssigen Festlegung des Beschlagteils im Werkstück führt. Vorzugsweise sind die Außenoberfläche des Grundkörpers und die Innenoberfläche des Spannrings bezogen auf die Mittelachse der Ausnehmung mit einem Kegelwinkel im Bereich von 0 Grad bis 5 Grad ausgeführt.

Bei einer vorteilhaften Weiterbildung der Erfindung ist vorgesehen, dass eine von der Steuernocke bestimmte Steuerkante in einem spitzen Winkel zu einer Kante einer Ausnehmung im Spannring ausgerichtet ist. Vorteilhaft ist es, wenn die Steuernocke oder eine Mehrzahl von Steuernocken an der Außenoberfläche des Grundkörpers angeordnet sind und jeweils für eine Wechselwirkung mit einer Kante einer Ausnehmung im Spannring ausgebildet sind. Vorzugsweise ist vorgesehen, dass der Spannring als geschlitzter Ring ausgebildet ist, um die gewünschte elastische Deformation durch Wechselwirkung des oder der Steuernocken mit der oder den korrespondierenden, insbesondere an Ausnehmungen im Spannring ausgebildeten, Kanten zu erleichtern. Bevorzugt ist vorgesehen, dass der Spannring mit einer Anzahl von Ausnehmungen versehen ist, deren Betrag gleich der Anzahl der Steuernocken ist. Durch die spitzwinklige Anordnung der Steuernocken gegenüber den Kanten wird bewirkt, dass bei einem ersten Auftreffen der Steuernocke auf die Kante nicht auf einem kurzen Weg die vollständige Deformation des Spannrings stattfinden muss, was die Einleitung eines hohen Drehmoments erfordern würde. Rein exemplarisch ist vorgesehen, dass die Kante, die zur Wechselwirkung mit der Steuernocke vorgesehen ist, parallel zur Mittelachse der Ausnehmung ausgerichtet ist. In diesem Fall ist die Steuernocke auch gegenüber der Mittelachse der Ausnehmung in einem spitzen Winkel ausgerichtet. Ergänzend oder alternativ kann vorgesehen sein, dass eine Mehrzahl von Steuernocken und zugeordneten Ausnehmungen phasenversetzt angeordnet sind, so dass bei einer rotatorischen Relativbewegung zwischen Grundkörper und Spannring ein kaskadiertes Eingreifen der einzelnen Steuernocken gewährleistet ist, um auch bei einer derartigen konstruktiven Ausgestaltung ein zu hohes Drehmoment zwischen Grundkörper und Spannring zu vermeiden.

Vorteilhafte Ausführungsformen der Erfindung sind in der Zeichnung dargestellt. Hierbei zeigt:
- Figur 1: eine perspektivische Darstellung einer ersten Ausführungsform eines Beschlagteils,
- Figur 2: eine Ansicht von unten auf das Beschlagteil gemäß der Figur 1,
- Figur 3: eine Schnittdarstellung des Beschlagteils gemäß den Figuren 1 und 2,
- Figur 4: eine teilweise geschnittene Draufsicht auf das Beschlagteil gemäß den Figuren 1 bis 3,
- Figur 5: eine perspektivische Darstellung einer zweiten Ausführungsform eines Beschlagteils,
- Figur 6: eine Schnittdarstellung der zweiten Ausführungsform des Beschlagteils gemäß der Figur 5,
- Figur 7: eine Variante des Beschlagteils gemäß den Figuren 5 und 6,
- Figur 8: eine teilweise geschnittene Draufsicht auf das Beschlagteil gemäß der Figur 7,
- Figur 9: eine perspektivische Darstellung einer dritten Ausführungsform eines Beschlagteils, und
- Figur 10: eine Schnittdarstellung des Beschlagteils gemäß der Figur 9.

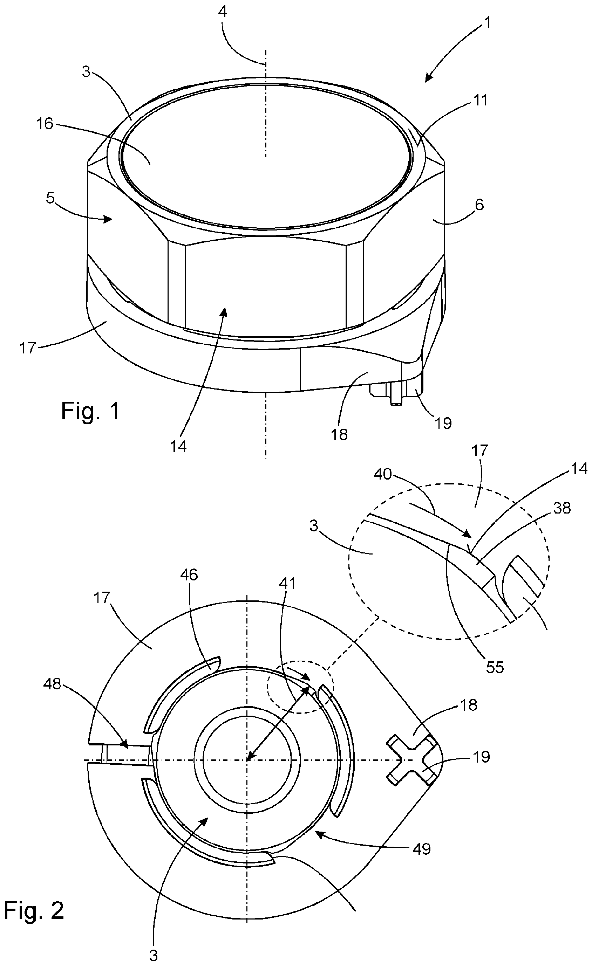

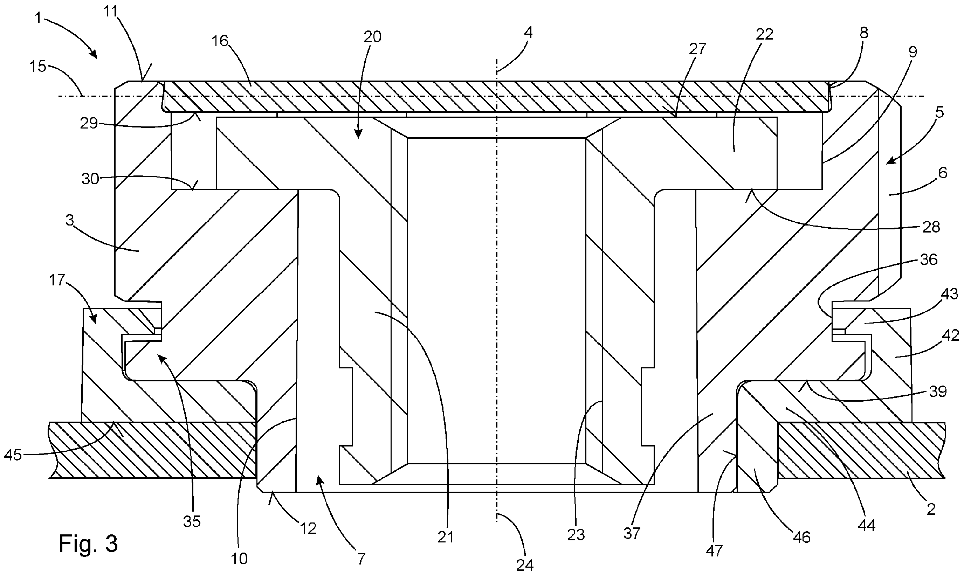

Eine in den Figuren 1 bis 4 dargestellte erste Ausführungsform eines Beschlagteils 1 ist rein exemplarisch zur Verbindung einer nicht dargestellten Schraube mit einem in der Figur 3 rein schematisch dargestellten Wandabschnitt 2 ausgebildet. Beispielsweise kann ein derartiges Beschlagteil 1 im Bereich des Flugzeugbaues eingesetzt werden, um Komponenten wie beispielsweise Verkleidungsteile an einer Innenwand eines Flugzeugrumpfs zu befestigen. Hierbei soll das Beschlagteil 1 möglichst in einer Weise am Wandabschnitt 2 befestigt werden, bei der es nicht erforderlich ist, ein Drehmoment mittels eines Werkzeugs wie beispielsweise eines Gabelschlüssels abzufangen, wenn ein Einschraubvorgang für die nicht dargestellte Schraube durchgeführt wird. Eine derartige beidseitige Drehmomenteinleitung ist beispielsweise bei einer klassischen Schraubverbindung mit einer Schraube und einer Mutter erforderlich, da sowohl am Schraubenkopf der Schraube als auch an der Mutter, in die die Schraube eingeschraubt wird, jeweils ein Drehmoment aufgebracht werden muss. Alternativ kann auch vorgesehen werden, die Schraube direkt in einem Gewinde im Wandabschnitt einzuschrauben, allerdings ist hierfür häufig die Wandstärke des Wandabschnitts zu gering, um eine zuverlässige Festlegung der Schraube zu gewährleisten.

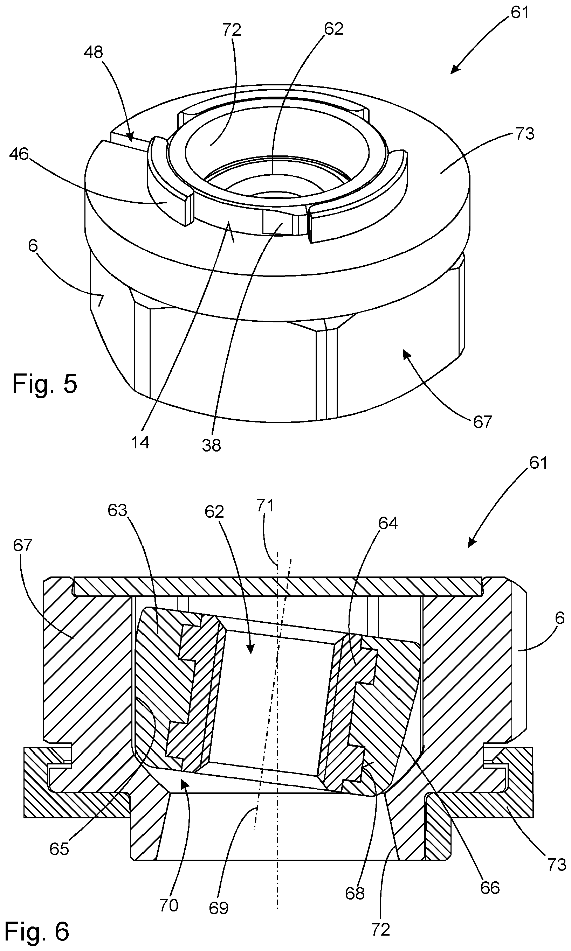

Beim Beschlagteil 1 gemäß den Figuren 1 bis 4 sowie auch bei den weiteren Ausführungsformen gemäß den Figuren 5 bis 8 ist hingegen vorgesehen, eine reibschlüssige Verbindung zwischen dem Wandabschnitt 2 und dem Beschlagteil 1 bzw. den alternativen Ausführungsformen zu schaffen, ohne dass hierzu ein Gegenhalten mit einem zweiten Werkzeug oder eine aufwändige Vorbereitung des Wandabschnitts, beispielsweise durch Gewinde schneiden, erforderlich ist.

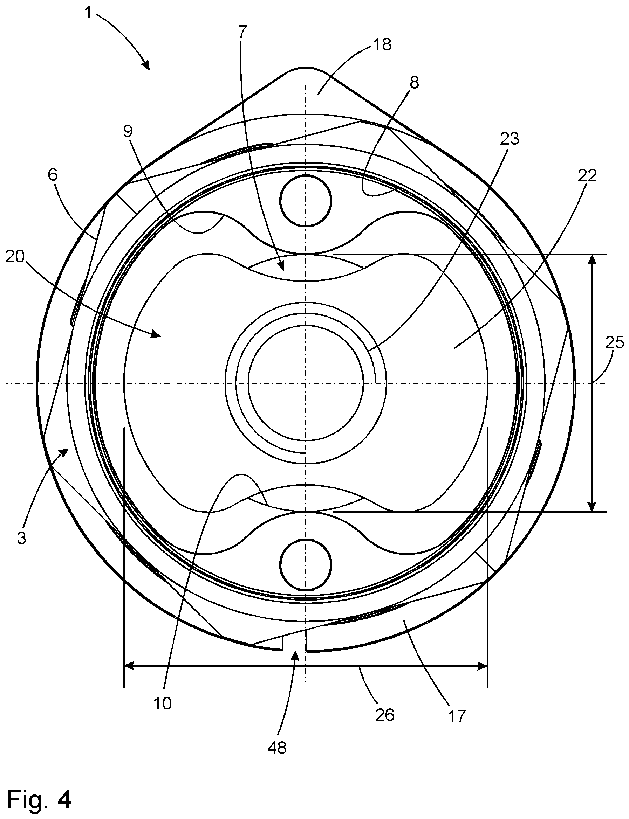

Um diese Funktion zu gewährleisten umfasst das Beschlagteil 1 einen Grundkörper 3, der längs einer Mittelachse 4 erstreckt ist. Rein exemplarisch ist der Grundkörper 3 an einer Außenoberfläche 14 abschnittsweise mit einer Sechskantprofilierung 5 versehen, die jeweils paarweise symmetrisch zur Mittelachse 4 angeordnete Schlüsselflächen 6 umfasst. Wie der Darstellung der Figur 2 entnommen werden kann, ist der Grundkörper 3 von einer längs der Mittelachse 4 erstreckten Ausnehmung 7 durchsetzt. Beispielhaft umfasst die Ausnehmung 7 insgesamt drei Ausnehmungsabschnitte 8, 9 und 10. Wie aus den Darstellungen der Figuren 1, 3 und 4 entnommen werden kann, ist der erste Ausnehmungsabschnitt 8 in einer nur symbolisch in der Figur 3 eingezeichneten Querschnittsebene 15, die quer zur Mittelachse 4 ausgerichtet ist, mit einem kreisförmigen Querschnitt ausgebildet. Wie der Schnittdarstellung der Figur 3 entnommen werden kann, kann der obere Ausnehmungsabschnitt 8 beispielhaft als Konusabschnitt verwirklicht sein, der sich längs der Mittelachse 4 zu einer Oberseite 11 des Grundkörpers 3 verjüngt. In dem oberen Ausnehmungsabschnitt 8 ist beispielhaft eine kreisrunde, als Planparallelplatte ausgebildete Abdeckplatte 16 aufgenommen, die die Ausnehmung 7 im Grundkörper 3 in axialer Richtung begrenzt. An den oberen Ausnehmungsabschnitt 8 grenzt ein mittlerer Ausnehmungsabschnitt 9 an, dessen Profilierung in der Darstellung der Figur 4 zu erkennen ist. Rein exemplarisch weist der mittlere Ausnehmungsabschnitt 9 eine Profilierung auf, die im Wesentlichen der Außenkontur der Zahl 8 entspricht. An den mittleren Ausnehmungsabschnitt 9 schließt sich längs der Mittelachse 4 ein rein exemplarisch kreiszylindrisch ausgebildeter unterer Ausnehmungsabschnitt 10 an, der an einer Unterseite 12 des Grundkörpers 3 ausmündet.

In der Ausnehmung 7 ist ein Koppelteil 20 aufgenommen, das rein exemplarisch eine Hülse 21 sowie einen endseitig an der Hülse 21 ausgebildeten, in radialer Richtung nach außen erstreckten Führungsabschnitt 22 aufweist. Das Koppelteil 20 ist von einem als Innengewindebohrung 23 ausgebildeten Gewindeabschnitt durchsetzt, wobei eine Symmetrieachse der Innengewindebohrung 23 auch als Gewindeachse 24 bezeichnet wird. Beispielhaft ist die Hülse 21 rotationssymmetrisch zur Gewindeachse 24 ausgebildet. Ferner ist der Führungsabschnitt 22, der auch als erster Profilabschnitt bezeichnet werden kann, in einer parallel zur Querschnittsebene 15 ausgerichteten und nicht näher dargestellten Querschnittsebene mit einer Profilierung verwirklicht, die geometrisch ähnlich zur Profilierung des mittleren Ausnehmungsabschnitts 9 ausgebildet ist, der auch als zweiter Profilabschnitt bezeichnet werden kann, und die im Wesentlichen der Außenkontur der Zahl 8 entspricht.

Rein exemplarisch sind der Führungsabschnitt 22 und die mittlere Ausnehmung 9 durch Streckung in zwei senkrecht zueinander ausgerichtete, nicht eingezeichnete Raumrichtungen, die quer zur Mittelachse 4 ausgerichtet sind, ineinander überführbar. Wie der Darstellung der Figur 4 entnommen werden kann, ist eine minimale Erstreckung 25 der mittleren Ausnehmung 9 kleiner als eine maximale Erstreckung des Führungsabschnitts 22. Hierdurch wird bei einer Verdrehung des Koppelteils 20 um die Mittelachse 4 aus der Freigabeposition gemäß der Figur 4 in eine nicht dargestellte Funktionsposition aufgrund des bezüglich der Mittelachse 4 eintretenden Formschlusses eine Drehmomentübertragung um die Mittelachse 4 zwischen dem Koppelteil 20 und dem Grundkörper 3 ermöglicht. Insoweit weist das Koppelteil 20 gegenüber dem Grundkörper 3 einen schwenkwinkelbegrenzten rotatorischen Freiheitsgrad um die Mittelachse 4 auf.

Ferner ist vorgesehen, dass eine Oberseite 27 des Führungsabschnitts 22 gegenüberliegend zu einer ersten Axialfläche 29 angeordnet ist, die von einer Unterseite der Abdeckplatte 16 bestimmt wird. Dabei wird davon ausgegangen, dass die Abdeckplatte 16 zumindest durch elastische, gegebenenfalls auch durch plastische, Deformation kraftschlüssig oder gegebenenfalls auch formschlüssig im oberen Ausnehmungsabschnitt 8 des Grundkörpers 3 aufgenommen ist und damit als Bestandteil des Grundkörpers 3 angesehen werden kann.

Eine Unterseite 28 des Führungsabschnitts 22 liegt an einer axialen Stirnfläche des Grundkörpers 3 an, die auch als zweite Axialfläche 30 bezeichnet wird und die durch den Übergang zwischen den mittleren Ausnehmungsabschnitt 9 und dem unteren Ausnehmungsabschnitt 10 geschaffen wird.

Rein exemplarisch ist vorgesehen, dass sowohl die erste Axialfläche 29 als auch die zweite Axialfläche 30 jeweils eben ausgebildet sind. Ferner ist vorgesehen, dass die erste Axialfläche 29 und die zweite Axialfläche 30 parallel zueinander beabstandet angeordnet sind. Darüber hinaus ist vorgesehen, dass die Oberseite 27 und die Unterseite 28 des Führungsabschnitts 22 in der Art einer Planparallelplatte ausgebildet sind. Durch diese Maßnahmen wird eine Beschränkung einer Relativbeweglichkeit des Koppelteils 20 gegenüber dem Grundkörper 3 auf Linearbewegungen in einer nicht dargestellten Bewegungsebene, die quer zur Mittelachse 4 ausgerichtet ist, bewirkt. Zusammen mit der durch die vorstehenden Maßnahmen nicht beeinträchtigten Schwenkbeweglichkeit des Koppelteils 20 gegenüber dem Grundkörper 3 ergibt sich somit, dass Relativbewegungen zwischen Koppelteil 20 und Grundkörper 3 als lineare Bewegungen in der quer zur Mittelachse 4 ausgerichteten Bewegungsebene sowie als Rotationsbewegungen um die Mittelachse 4 erfolgen können, wobei aufgrund der Profilierungen des mittleren Ausnehmungsabschnitt 9 und des Führungsabschnitts 22 sowohl eine Beschränkung der Linearbewegungen als auch eine Beschränkung der Schwenkbewegung gewährleistet ist.

Wie der Darstellung der Figur 3 entnommen werden kann, schließt sich angrenzend an die Sechskantprofilierung 5 des Grundkörpers 3 ein ebenfalls der Außenoberfläche 14 des Grundkörpers 3 zugehöriger, rein exemplarisch rotationssymmetrisch zur Mittelachse 4 ausgebildeter Lagerabschnitt 35 an, der für eine drehbewegliche Aufnahme eines Spannrings 17 ausgebildet ist. Beispielhaft ist der Lagerabschnitt 35 kreiszylindrisch ausgebildet, wobei unmittelbar angrenzend an die Sechskantprofilierung 5 des Grundkörpers eine umlaufende Nut 36 in den Lagerabschnitt 35 eingebracht ist, die rein exemplarisch mit einem rechteckigen Querschnitt in der Darstellungsebene gemäß der Figur 3 ausgebildet ist. In einer Verlängerung des Lagerabschnitts 35 längs der Mittelachse 4 ist ein ebenfalls der Außenoberfläche 14 des Grundkörpers 3 zugehöriger Hülsenabschnitt 37 ausgebildet, der rein exemplarisch in einer nicht dargestellten, quer zur Mittelachse 4 ausgerichteten Querschnittsebene einen kreisringförmigen Querschnitt aufweist. Wie nachstehend noch näher ausgeführt wird, ist der Hülsenabschnitt 37 endseitig mit mehreren, jeweils in radialer Richtung nach außen erstreckten Steuernocken 38 versehen.

Um die gewünschte drehbewegliche Lagerung des Spannrings 17 am Grundkörper 3 zu gewährleisten umfasst der Spannring 17 ein rein exemplarisch rotationssymmetrisch zur Mittelachse 4 ausgebildetes Ringteil 42, das gemäß der Darstellung der Figur 3 mit einer U-förmigen Profilierung ausgebildet ist. Dabei greift ein kürzerer U-Schenkel 43 des Ringteils 42 in die Nut 36 ein. Ein längerer-Schenkel 44 des Ringteils 42 liegt an einer axial ausgerichteten Stirnfläche 39 des Lagerabschnitts 35 an. Dementsprechend umgreift das Ringteil 42 den Lagerabschnitt 35 in einer Weise, die bezüglich Linearbewegungen und Kippbewegungen quer zur Mittelachse eine formschlüssige Verbindung zwischen dem Spannring 17 und dem Grundkörper 3 gewährleistet. Ferner ist die gewünschte Drehbeweglichkeit des Spannrings 17 gegenüber dem Grundkörper 3 um die Mittelachse 4 aufgrund der Ausgestaltung des Ringteils 42 und des Lagerabschnitt 35 gewährleistet.

Der Spannring 17 weist ferner an einer der Sechskantprofilierung 5 des Grundkörpers 3 abgewandten Axialstirnfläche 45 rein exemplarisch 3 jeweils kreisringabschnittsförmig ausgebildete und koaxial zur Mittelachse angeordnete Axialvorsprünge 46 auf, deren Innenoberflächen 47 für eine mechanische Wechselwirkung mit den Steuernocke 38 ausgebildet sind.

Wie der Detaildarstellung der Figur 2 entnommen werden kann, weisen die Steuernocken 38 in der Darstellungsebene gemäß der Figur 2, die parallel zur Querschnittsebene 15 gemäß der Figur 3 ausgerichtet ist, eine keilförmige Profilierung auf. Diese Profilierung ist dadurch charakterisiert, dass bei einer Betrachtung der Steuernocke 38 in einer, gemäß der Darstellung der Figur 2 im Uhrzeigersinn ausgerichteten, Umfangsrichtung 40 ein Abstand 41 zwischen der Mittelachse 4 und einer Außenoberfläche 55 der Steuernocke 38 zunimmt, insbesondere im Wesentlichen eine proportionale Abstandszunahme vorgesehen ist. Angrenzend an die keilförmige Profilierung der Steuernocke 38 schließt sich eine konkav abgerundete Profilierung an, wobei der Abstand der Außenoberfläche 55 bei Betrachtung in der Umfangsrichtung 40 im Bereich der abgerundete Profilierung zunächst stark abnimmt, um dann wieder in eine schwächere Krümmung überzugehen, die ihrerseits dann in die entgegengesetzt, konvex gekrümmte Außenfläche des Hülsenabschnitts 37 übergeht.

Ferner ist beispielhaft vorgesehen, dass die inneren Oberflächen 47 der Axialvorsprünge 46 an den Übergängen zu den jeweiligen Außenoberflächen jeweils endseitig konvex abgerundet sind, um bei einer Relativbewegung zwischen Grundkörper 3 und Spannring 17 eine möglichst gleichmäßig ansteigende Verdrängungswirkung durch die Steuernocke 38 gegenüber dem Spannring 17 und damit einen möglichst gleichförmigen Kraft-bzw. Drehmomentanstieg für die Relativbewegung zischen Grundkörper 3 und Spannring 17 zu erzielen, in deren Zuge eine Durchmesservergrößerung des Spannrings 17 durch elastische oder elastische und plastische Deformation erfüllt werden soll. Um diese Durchmesservergrößerung für den Spannring 17 zu erleichtern, ist der Spannring 17 rein exemplarisch mit einem in radialer Richtung nach außen erstreckten Entlastungsschlitz 48 versehen, wie er in den Figuren 2 und 4 erkennbar ist.

Prinzipiell ist vorgesehen, dass eine Drehmomentübertragung zwischen dem Beschlagteil 1 und einer Ausnehmung im Wandabschnitt 2 ausschließlich reibschlüssig stattfindet. Hierzu ist es vorteilhaft, wenn ein Außendurchmesser der Axialvorsprünge 46 nur geringfügig kleiner als ein Innendurchmesser einer im Wandabschnitt 2 ausgebildeten Ausnehmung gewählt ist. Für eine zusätzliche Drehmomentabstützung ist rein exemplarisch am Spannring 17 ein in radialer Richtung abragender Ausleger 18 vorgesehen, der in einem radial außenliegenden Endbereich mit einem längs der Mittelachse 4 erstreckten Stützdorn 19 versehen ist. Dieser Stützdorn 19 bis zum Eingriff in eine abseits der zur Aufnahme der Axialvorsprung 46 ausgebildeten Ausnehmung vorgesehenen zweiten Ausnehmung vorgesehen und ermöglicht hierüber eine formschlüssige Drehmomentabstützung zwischen dem Spannring 17 und dem Wandabschnitt 2. Für eine Vergrößerung der Reibwirkung zwischen dem Beschlagteil 1 und der Ausnehmung im Wandabschnitt 2 kann vorgesehen werden, einen Folienabschnitt, insbesondere einen selbstklebenden Folienabschnitt zwischen dem Beschlagteil 1 und der Ausnehmung im Wandabschnitt 2 anzuordnen. Mit einem solchen Folienabschnitt kann auch eine Abdichtwirkung zwischen dem Beschlagteil 1 und der Ausnehmung im Wandabschnitt 2 bewirkt werden.

Bei der in den Figuren 5 und 6 dargestellten zweiten Ausführungsform eines Beschlagteils 61 ist abweichend von der ersten Ausführungsform gemäß den Figuren 1 bis 4 vorgesehen, dass das Koppelteil 62 einen ersten Koppelkörper 63 sowie einen damit fest verbundenen zweiten Koppelkörper 64 aufweist. Beispielhaft ist vorgesehen, dass der erste Koppelkörper 63 im Wesentlichen als Pyramidenabschnitt ausgebildet ist, der insgesamt vier jeweils keilförmig zueinander ausgerichtete Seitenwände aufweist. In der Darstellung der Figur 6 sind mit der ersten Seitenwand 65 und der zweiten Seitenwand 66 zwei der insgesamt vier Seitenwände des ersten Koppelkörpers 63 zu sehen. Beispielhaft ist vorgesehen, dass der erste Koppelkörper 63 aus einem Kunststoffmaterial, beispielsweise einem formstabilen Kunststoffmaterial wie PEEK (Polyetheretherketon) hergestellt ist, mit dem einerseits eine vorteilhafte Kraft- und Drehmomentübertragung zwischen dem Koppelteil 62 und dem Grundkörper 67 sichergestellt ist und andererseits aufgrund der Materialpaarung mit dem typischerweise aus Stahl hergestellten Grundkörper 67 selbstschmierende Eigenschaften verbunden sind. Im ersten Koppelkörper 63 ist der zweite Koppelkörper 64 aufgenommen, beispielsweise im Zuge eines Kunststoffspritzgussverfahrens umspritzt. Der zweite Koppelkörper 64 ist vorzugsweise aus Metall, insbesondere Stahl, hergestellt und hinsichtlich seiner Außenoberfläche 68 rotationssymmetrisch zur Gewindeachse 69 ausgebildet.

Die Ausnehmung 70 im Grundkörper 67 weist in einer nicht dargestellten, quer zur Mittelachse 71 ausgerichteten Querschnittsebene einen im Wesentlichen quadratischen Querschnitt auf. In Kombination mit der pyramidenförmigen Gestaltung des ersten Koppelkörpers 63 wird somit eine Drehkupplung geschaffen, bei der eine Drehmomentübertragung um die Mittelachse 71 zwischen dem Koppelteil 62 und dem Grundkörper 67 ermöglicht ist. Ferner wird durch die pyramidenförmige Gestaltung des ersten Koppelkörpers 63 in Verbindung mit dem quadratischen Querschnitt der Ausnehmung 70 eine Verkippung des Koppelteils 62 um nicht eingezeichnete Kippachsen ermöglicht, die senkrecht zur Gewindeachse 69 und senkrecht zueinander ausgerichtet sind und die jeweils die Seitenwände 65, 66 sowie die nicht sichtbaren weiteren Seitenwände mit einem minimalen Winkel zur jeweiligen Flächennormalen der entsprechenden Seitenwand schneiden.

Um eine Übertragung von Axialkräften längs der Mittelachse 71 zwischen dem Koppelteil 62 und dem Grundkörper 67 zu gewährleisten, ist die Ausnehmung 70 abschnittsweise konvex ausgebildet, um anschließend in eine kegelförmige aufgeweitete Mündungsöffnung 72 überzugehen. Durch die Mündungsöffnung 72 wird der Montageraum für eine nicht dargestellte Schraube geschaffen, die relativ zum Beschlagteil 61 in einem von den Geometrien des Koppelteils 62 und der Ausnehmung 70 beschränkten, ebenfalls kegelabschnittsförmigen, Bewegungsraum verkippt werden kann.

Die Gestaltung des Beschlagteils 61 im Hinblick auf den Spannring 73 ist identisch zur Gestaltung des Beschlagteils 1, so dass sich eine nähere Beschreibung des Spannrings 73 erübrigt.

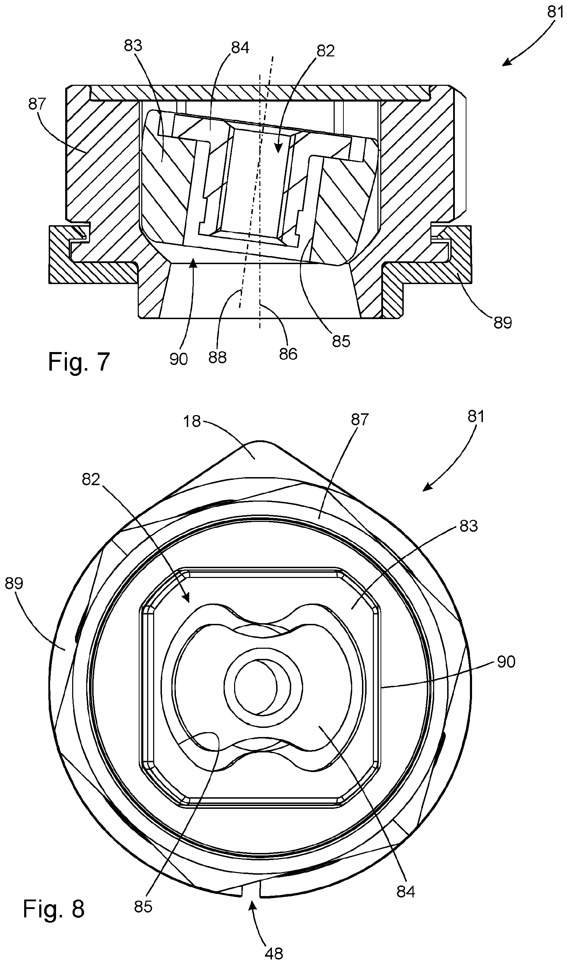

Bei der in den Figuren 7 und 8 dargestellten dritten Ausführungsform eines Beschlagteils 81 handelt es sich um eine Variante der zweiten Ausführungsform des Beschlagteils 61 gemäß den Figuren 5 und 6, so dass für funktionsgleiche Komponenten die gleichen Bezugszeichen vergeben werden und diese auch nicht erneut beschrieben werden.

Im Unterschied zum Beschlagteil 61 ist beim Beschlagteil 81 das Koppelteil 82 aus zwei separaten, zueinander relativbeweglichen Koppelkörpern 83, 84 gebildet. Der erste Koppelkörper 83 weist die gleiche Außengeometrie wie der erste Koppelkörper 63 auf und ist für die Aufnahme in einem Grundkörper 87 vorgesehen, der identisch zum Grundkörper 67 ausgebildet ist. Aus der Darstellung der Figur 8 ist insbesondere die im Wesentlichen quadratische Profilierung der Ausnehmung 90 im Grundkörper 87 zu sehen, die in gleicher Weise wie die Ausnehmung 70 im Grundkörper 67 der zweiten Ausführungsform des Beschlagteils 61 ausgebildet ist.

Der zweite Koppelkörper 84 ist in identischer Weise wie das Koppelteil 20 der ersten Ausführungsform des Beschlagteils 1 ausgebildet, so dass beim zweiten Koppelkörper 84 die gleichen Bezugszeichen wie für das Koppelteil 20 verwendet werden und sich eine neuerliche Beschreibung erübrigt.

Der erste Koppelkörper 83 ist mit einer Ausnehmung 85 versehen, die identisch wie die Ausnehmung 7 des Grundkörpers 3 gestaltet ist, so dass sich auch hier eine neuerliche Beschreibung erübrigt und die gleichen Bezugszeichen eingesetzt werden.

Dementsprechend stellt die dritte Ausführungsform des Beschlagteils 81 eine Hybridversion aus der ersten Ausführungsform des Beschlagteils 1 und der zweiten Ausführungsform des Beschlagteils 61 dar, bei der sowohl eine Verkippung des Koppelteils 82 in einem beschränkten Winkelbereich gegenüber der Mittelachse 86 möglich ist, als auch eine translatorische Verlagerung des zweiten Koppelkörper 84 gegenüber dem ersten Koppelkörper 83 in einer nicht eingezeichnete Bewegungsebene, die quer zur Gewindeachse 88 des zweiten Koppelkörpers 84 ausgerichtet ist. Dementsprechend ermöglicht die dritte Ausführungsform des Beschlagteils 81 sowohl einen Ausgleich von Winkelabweichungen als auch einen Ausgleich von translatorischen Abweichungen zwischen einer Ausnehmung in einem Wandabschnitt und einer daran anzubringenden Komponente wie beispielsweise einem Verkleidungsteil.

Die Gestaltung des Beschlagteils 81 im Hinblick auf den Spannring 89 ist identisch zur Gestaltung des Beschlagteils 1, so dass sich eine nähere Beschreibung des Spannrings 89 erübrigt.

Eine Funktionsweise für das Beschlagteil 81 kann wie folgt beschrieben werden:
Zunächst wird das Beschlagteil 81 mit den Axialvorsprüngen 46 in eine nicht näher dargestellte Ausnehmung in einem Wandabschnitt 2 eingesetzt. Dabei wird davon ausgegangen, dass die Ausnehmung im Wandabschnitt 2 kreisförmig ausgebildet ist und einen Innendurchmesser aufweist, der geringfügig größer als ein Außendurchmesser der Axialvorsprünge 46 ist. Anschließend wird eine nicht dargestellte Schraube, die beispielsweise ein ebenfalls nicht dargestelltes Verkleidungsteil durchsetzt, in die Innengewindebohrung 23 des zweiten Koppelkörpers 84 eingeschraubt. Hierbei kann sich das Koppelteil 82 aufgrund der geometrischen Gestaltung des ersten Koppelkörper 83 sowie der geometrischen Gestaltung des zweiten Koppelkörper 84 sowohl im Hinblick auf eine Winkelausrichtung gegenüber der Mittelachse 86 als auch im Hinblick auf eine lineare Ausrichtung zwischen der Gewindeachse 88 und dem ersten Koppelkörper 83 in vorteilhafter Weise ausrichten. Im weiteren Verlauf des Einschraubvorgangs erfolgt eine Drehmomentübertragung von der Schraube über das Koppelteil 82 auf den Grundkörper 87, wobei aufgrund der geometrischen Gestaltung des ersten Koppelkörper des 83 und des zweiten Koppelkörper 84 eine bezüglich der Mittelachse 86 formschlüssige Drehmomentübertragung zwischen dem Koppelteil 82 und dem Grundkörper 87 gewährleistet ist. Aufgrund dieser Drehmomentübertragung kommt es, insbesondere unter Berücksichtigung der Drehmomentabstützung durch die Reibung zwischen den Axialvorsprüngen 46 und der Innenoberfläche der Ausnehmung im Wandabschnitt 2 sowie des Stützdorns 19 in einer zweiten Ausnehmung im Wandabschnitt 2 zu einer Relativbewegung zwischen dem Grundkörper 87 und dem Spannring 89. Im Zuge dieser Relativbewegung gelangen die Steuernocken 38 in Wechselwirkung mit den Innenoberflächen 47 der Axialvorsprünge 46 und führen daher zu einer elastischen oder elastischen und plastischen Aufweitung des Spannrings 89 in radialer Richtung. Hierdurch erhöht sich die von den Axialvorsprüngen 46 in radialer Richtung nach außen auf die Innenoberfläche der Ausnehmung im Wandabschnitt 2 übertragenen Normalkräfte und damit auch die hieraus resultierenden Reibkräfte, so dass sowohl eine drehfeste als auch eine zugfeste kraftschlüssige Kopplung zwischen dem Beschlagteil 81 und dem Wandabschnitt 2 geschaffen wird.

Alternativ kann vorgesehen sein, das das Beschlagteil 81 durch eine unmittelbare Drehmomenteinleitung auf den Grundkörper 87, beispielsweise mittels eines Gabelschlüssels, der an der Sechskantprofilierung 5 des Grundkörpers 87 angesetzt wird, erfolgt und ein Einschraubvorgang für die Schraube, mit der die zu befestigende Komponente festgelegt werden soll, in das Koppelteil 82 erst zu einem späteren Zeitpunkt vorgenommen wird.

Um das Beschlagteil 81 vom Wandabschnitt 2 zu lösen ist es vorgesehen, zunächst die am Beschlagteil 81 befestigte Komponente und die zugehörige Schraube zu entfernen. Möglicherweise kommt es bereits hierbei zu einer rotatorischen Relativbewegung zwischen Grundkörper 87 und Spannring 89 in einer Richtung, bei der die Wechselwirkung zwischen den Steuernocken 38 und den Axialvorsprüngen 46 reduziert wird. Sofern dies nicht der Fall sein sollte, kann nach Entfernung der Komponente und der zugehörigen Schraube mittels eines geeigneten Werkzeugs, beispielsweise eines Gabelschlüssels, ein Drehmoment auf die Sechskantprofilierung 5 des Beschlagteils 81 eingeleitet werden, um eine Lösemoment auf den Grundkörper 87 um die Mittelachse 86 einzuleiten, das im Ergebnis dazu führt, dass die Steuernocke 38 außer Eingriff mit den Innenoberflächen der Axialvorsprünge 46 gebracht werden können und in Zwischenräumen 49 zwischen den Axialvorsprüngen 46 angeordnet sind, wodurch eine elastische Aufweitung des Spannrings 89 auf ein Minimalmaß reduziert wird.

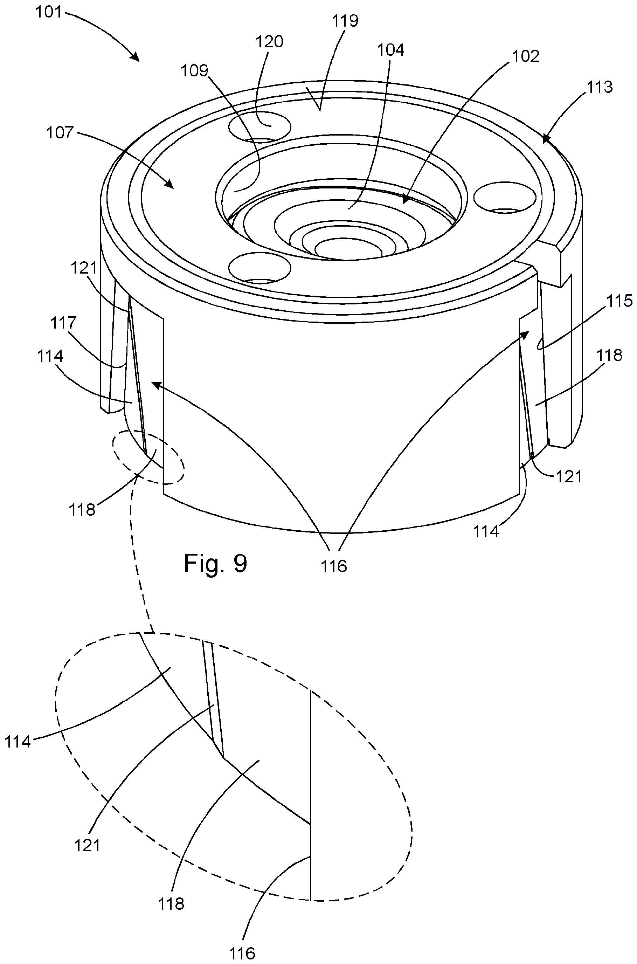

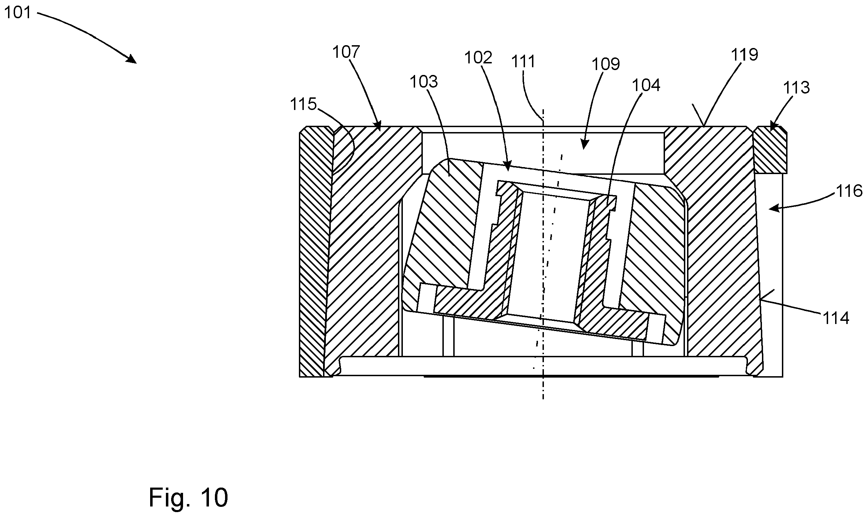

Bei der in den Figuren 9 und 10 gezeigten dritten Ausführungsform eines Beschlagteils 101 wird auf eine nochmalige vollständige Beschreibung von Strukturen, die bereits aus den vorstehend beschriebenen Ausführungsformen bekannt sind, verzichtet.

Beim Beschlagteil 101 ist vorgesehen, dass der Grundkörper 107 in gleicher Weise wie bei den vorstehend beschriebenen Ausführungsformen von Beschlagteilen 1, 61 und 81 mit einer Ausnehmung 109 versehen ist. In dieser Ausnehmung 109 ist ein Koppelteil 102 aufgenommen, das in der Figur 10 näher dargestellt ist und das einen ersten Koppelkörper 103 sowie einen zweiten Koppelkörper 104 aufweist, wobei der erste Koppelkörper 103 schwenkbeweglich in der Ausnehmung 109 aufgenommen ist und wobei der zweite Koppelkörper 104 linearbeweglich gegenüber dem ersten Koppelkörper 103 gelagert ist. Dementsprechend kann auch bei der Ausführungsform des Beschlagteils 101, wie es in den Figuren 9 und 10 gezeigt ist, von einer Schwenkbeweglichkeit und einer Linearbeweglichkeit für den zweiten Koppelkörper 104 gegenüber dem Grundkörper 107 und damit von einer variablen räumlichen Ausrichtung der Gewindeachse 124 ausgegangen werden.

Wie der Darstellung der Figuren 9 und 10 ferner entnommen werden kann, ist der Grundkörper 107 rein exemplarisch vollständig von einem Spannring 113 umgeben, wobei der Spannring 113 drehbeweglich an einer Außenoberfläche 114 des Grundkörpers 107 gelagert ist. Beispielhaft ist vorgesehen, dass die Außenoberfläche 114 des Grundkörpers sowie eine Innenoberfläche 115 des Spannrings 113 jeweils konusabschnittsförmig ausgebildet sind, wobei die Geometrien der Außenoberfläche 114 und der Innenoberfläche 115 derart gewählt sind, dass die Innenoberfläche 115 flächig an der Außenoberfläche 114 anliegt.

Der Spannring 113 ist rein exemplarisch mit drei jeweils schlitzförmigen und im Wesentlichen in Richtung einer Mittelachse 111 der Ausnehmung 109 erstreckten Steueröffnungen 116 versehen, wobei sich zwei der Steueröffnungen 116 nur über einen Teilbereich der Länge des Spannrings 113 erstrecken, während nur die dritte Steueröffnung 116 über die gesamte Länge des Spannrings 113 erstreckt ist und dadurch zu einer erheblichen Verbesserung der elastisch Deformierbarkeit für den Spannring 113 beiträgt. An jeder der Steueröffnungen 116 ist jeweils eine rein exemplarisch abgerundet ausgebildete Kante 117 vorgesehen, die für eine Wechselwirkung mit einer Steuernocke 118 vorgesehen ist, die an der Außenoberfläche 114 des Grundkörpers 107 ausgebildet ist. Wie der Detaildarstellung der Figur 9 entnommen werden kann, ist eine Steuerkante 121 der Steuernocke 118, die sich durch den Radiussprung zwischen einem Radius der Außenoberfläche 114 des Grundkörpers 107 und einem Radius der Steuernocke 118 ergibt, in einem spitzen Winkel zur Kante 117 ausgerichtet. Durch diese spitzwinklige Ausrichtung der Steuerkante 121 gegenüber der auch als Rotationsachse für die Relativbewegung des Spannrings 113 gegenüber dem Grundkörper 107 dienende Mittelachse 111 wird im Zuge dieser Rotationsbewegung eine allmähliche Überdeckung zwischen der Steuernocke 118 und der Innenoberfläche 115 des Spannrings 113 erzielt. Hierdurch kann eine langsam ansteigende Drehmomentkurve für ein Drehmoment, das für die Relativbewegung zwischen Spannring 113 und Grundkörper 108 erforderlich ist, gewährleistet werden.

An einer axial ausgerichteten Stirnfläche 119 des Grundkörpers sind rein exemplarisch drei in gleicher Winkelteilung zur Mittelachse 111 angeordnete Bohrungen 120 ausgebildet, die für einen Eingriff eines nicht dargestellten Werkzeugs genutzt werden können, das mit Zapfen ausgerüstet ist, die mit den Bohrungen 120 korrespondieren. Mit einem derartigen Werkzeug kann eine Drehmomentabstützung für den Grundkörper bewirkt werden. Ferner kann vorgesehen sein, mit einem weiteren, ebenfalls nicht dargestellten Werkzeug in den durchgehenden Schlitz der Steueröffnung 116 einzugreifen, um dadurch eine Abstützung eines Drehmoments für den Spannring 113 zu bewirken. Beispielhaft kann vorgesehen sein, dass das Beschlagteil 101 in ein Sackloch in einem nicht dargestellten Werkstück eingesteckt wird und anschließend durch Verwendung von nicht dargestellten Werkzeugen, die in die Bohrungen 120 des Grundkörpers 107 und in den Schlitz im Spannring 113 eingreifen, durch eine relative Rotationsbewegung zwischen Grundkörper 107 und Spannring 113 im Werkstück verriegelt wird. In einem anschließenden Schritt kann dann ein nicht dargestellter Körper unter Verwendung einer Schraube, die in das Koppelteil 102 eingeschraubt wird, an dem mit dem Beschlagteil 101 ausgerüsteten Werkstück festgelegt werden.

## Patentansprüche

1. Beschlagteil (1; 61; 81; 101) zur Festlegung eines Gewindeelements an einem Wandabschnitt (2), mit einem Grundkörper (3; 67; 87; 107), der von einer Ausnehmung (7; 70; 90; 109) durchsetzt ist, die längs einer Mittelachse (4; 71; 86; 111) erstreckt ist, mit einem Spannring (17; 73; 89; 113), der drehbeweglich an einer Außenoberfläche (14; 114), insbesondere an einem koaxial zur Mittelachse (4; 71; 86; 111) angeordneten Hülsenabschnitt (37), des Grundkörpers (3; 67; 87; 107) angebracht ist, wobei an der Außenoberfläche (14; 114), insbesondere an dem Hülsenabschnitt (37), eine erste Steuernocke (38; 118) zugeordnet ist und/oder wobei dem Spannring (17; 73; 89, 113) eine zweite Steuernocke zugeordnet ist, die bei einer Drehbewegung des Spannrings (17; 73; 89; 113) gegenüber dem Grundkörper (3; 67; 87; 107) für eine elastische oder elastische und plastische Durchmesserveränderung des Spannrings (17; 73; 89; 113) ausgebildet ist, **dadurch gekennzeichnet, dass** ein Koppelteil (20; 62; 82; 102) beweglich in der Ausnehmung (7; 70; 90; 109) aufgenommen ist und mit dem Grundkörper (3; 67; 87; 107) eine spielbehaftete Drehkupplung für eine Übertragung eines Drehmoments zwischen dem Koppelteil (20; 62; 82; 102) und dem Grundkörper (3; 67; 87; 107) um die Mittelachse (4; 71; 86; 111) bildet, wobei ein Gewindeabschnitt (23) des Koppelteils (20; 62; 82; 102) eine Gewindeachse (24; 124) bestimmt, die mit einer variablen Orientierung in einem vorgebbaren Winkelintervall und/oder in einem vorgebbaren Abstandsintervall zur Mittelachse (4; 71; 86; 111) ausgerichtet ist, wobei ein Teilbereich einer Außenoberfläche des Koppelteils (20; 62; 82; 102) einen ersten Profilabschnitt (22) bestimmt und wobei ein Teilbereich einer Innenoberfläche der Ausnehmung (7; 70; 90; 109) einen zweiten Profilabschnitt (9) bestimmt, wobei der erste Profilabschnitt (22) mit dem zweiten Profilabschnitt (9) in einer Funktionsstellung eine spielbehaftete Drehkupplung für eine Drehmomentübertragung zwischen dem Koppelteil (20; 62; 82; 102) und dem Grundkörper (3; 67; 87; 107) bildet und in einer Freigabestellung für eine Relativbewegung zwischen dem Koppelteil (20; 62; 82; 102) und dem Grundkörper (3; 67; 87; 107) mit wenigstens einem geometrisch begrenzten rotatorischen Freiheitsgrad und/oder wenigstens einem geometrisch begrenzten linearen Freiheitsgrad der Bewegung ausgebildet ist.

2. Beschlagteil (1; 61; 81; 101) nach Anspruch 1, **dadurch gekennzeichnet, dass** das Koppelteil (20; 62; 82; 102), insbesondere abschnittsweise, in einer quer zur Mittelachse (4; 71; 86) ausgerichteten Querschnittsebene (15) einen ersten Querschnitt aufweist und dass die Ausnehmung (7; 70; 90; 109), insbesondere abschnittsweise, in der Querschnittsebene einen zweiten Querschnitt aufweist, wobei der erste Querschnitt und der zweite Querschnitt geometrisch ähnlich ausgebildet sind, insbesondere der zweite Querschnitt durch Streckung aus dem ersten Querschnitt hervorgeht.

3. Beschlagteil (1; 61; 81) nach einem der vorhergehenden Ansprüche, **dadurch gekennzeichnet, dass** der Spannring (17; 73; 89) einen quer zur Mittelachse (4; 71; 86) in radialer Richtung abragenden Ausleger (18) umfasst, der endseitig mit einem längs der Mittelachse (4; 71; 86) erstreckten Stützdorn (19) versehen ist.

4. Beschlagteil (1; 61; 81) nach einem der vorhergehenden Ansprüche, **dadurch gekennzeichnet, dass** die erste Steuernocke (38) an der Außenoberfläche (14; 114), vorzugsweise an einer bogenförmigen, insbesondere kreiszylindrischen, Außenfläche des Hülsenabschnitts (37), mit einer keilförmigen Profilierung ausgebildet ist, die in radialer Richtung nach außen abragt und dass der Spannring (17; 73; 89) mit wenigstens einer Ausnehmung (49) versehen ist, die in einer Freigabestellung des Spannrings (17; 73; 89) gegenüber dem Grundkörper (3; 67; 87) zur Aufnahme der ersten Steuernocke (38) ausgebildet ist.

5. Beschlagteil (1; 61; 81; 101) nach einem der vorhergehenden Ansprüche, **dadurch gekennzeichnet, dass** das Koppelteil (20; 62; 82; 102) einen, insbesondere als Planparallelplatte ausgebildeten, Führungsabschnitt (22) aufweist, der zwischen einer ersten Axialfläche (29) des Grundkörpers (3; 67; 87; 107) und einer zweiten Axialfläche (30) des Grundkörpers (3; 67; 87; 107), die gegenüberliegend, insbesondere parallel, zur ersten Axialfläche (29) ausgebildet ist, aufgenommen ist, um eine Begrenzung von Relativbewegungen des Koppelteils (20; 62; 82; 102) gegenüber dem Grundkörper (3; 67; 87; 107) auf lineare Bewegungen in einer quer zur Mittelachse (4; 71; 86; 111) ausgerichteten Bewegungsebene (15) zu gewährleisten.

6. Beschlagteil (1; 61; 81; 101) nach einem der Ansprüche 1 bis 4, **dadurch gekennzeichnet, dass** das Koppelteil (82; 102) einen ersten Koppelkörper (83; 103) umfasst, der kippbeweglich um wenigstens eine, insbesondere um zwei senkrecht zueinander, quer zur Mittelachse (86; 111) des Grundkörpers (87; 107) ausgerichtete Kippachsen in der Ausnehmung (90; 109) aufgenommen ist, und einen zweiten Koppelkörper (84; 104) umfasst, der mit dem Gewindeabschnitt (23) versehen ist und der linearbeweglich am ersten Koppelkörper (83; 103) gelagert ist.

7. Beschlagteil (1; 61; 81; 101) nach einem der vorhergehenden Ansprüche, **dadurch gekennzeichnet, dass** die Ausnehmung (7; 70; 90; 109) abschnittsweise einen kleineren Querschnitt als das Koppelteil (20; 62; 82; 102) aufweist und ein damit gebildeter Hinterschnitt für das Koppelteil (20; 62; 82; 102) eine formschlüssige Kraftübertragung zwischen dem Koppelteil (20; 62; 82; 102) und dem Grundkörper (3; 67; 87; 107) längs der Mittelachse (4; 71; 86; 111) gewährleistet.

8. Beschlagteil (1; 61; 81) nach einem der vorhergehenden Ansprüche, **dadurch gekennzeichnet, dass** der Spannring (113) die Außenoberfläche (114) des Grundkörpers (107) zumindest nahezu vollständig, insbesondere vollständig, umgibt.

9. Beschlagteil (1; 61; 81) nach Anspruch 8, **dadurch gekennzeichnet, dass** die Außenoberfläche (114) des Grundkörpers (107) und eine Innenoberfläche (115) des Spannrings (113) jeweils konusabschnittsförmig ausgebildet sind.

10. Beschlagteil (1; 61; 81) nach Anspruch 8 oder 9, **dadurch gekennzeichnet, dass** eine von der Steuernocke (118) bestimmte Steuerkante (121) in einem spitzen Winkel zu einer Kante (117) einer Ausnehmung (116) im Spannring (113) ausgerichtet ist.

## Claims

1. Fitting (1; 61; 81; 101) for fixing a threaded element to a wall section (2), comprising a base body (3; 67; 87; 107) which is penetrated by a recess (7; 70; 90; 109), which recess is extended along a central axis (4; 71; 86; 111), further comprising a clamping ring (17; 73; 89; 113) which is rotatably movable mounted on an outer surface, in particular on a sleeve section (37) arranged coaxially to the central axis (4; 71; 86; 111), of the base body (3; 67; 87; 107), wherein a first cam (38; 118) is assigned to the outer surface (14; 114), in particular to the sleeve section (37), and/or wherein a second cam is assigned to the to the clamping ring (17; 73; 89; 113), which effectuates a change in diameter of the clamping ring (17; 73; 89; 113) during a rotary movement of the clamping ring (17; 73; 89; 113) relative to the base body (3; 67; 87; 107), **characterized in that** a coupling part (20; 62; 82; 102) is movably received in the recess (7; 70; 90; 109) and forms with the base body (3; 67; 87; 107) a rotary coupling for a transmission of a torque between the coupling part (20; 62; 82; 102) and the base body (3; 67; 87; 107) about the central axis (4; 71; 86; 111), wherein a threaded portion (23) of the coupling part (20; 62; 82; 102) determines a thread axis (24; 124), which is aligned with a variable orientation within a predetermined angular interval and/or within a predetermined distance interval to the central axis (4; 71; 86; 111), wherein a region of an outer surface of the coupling part (20; 62; 82; 102) defines a first profile (22) and wherein a region of an inner surface of the recess (7; 70; 90; 109) defines a second profile (9), wherein the first profile (22) forms with the second profile (9) a rotary coupling for a torque transmission between the coupling part (20; 62; 82; 102) and the base body (3; 67; 87; 107) in a functional position and is designed for a relative movement between the coupling part (20; 62; 82; 102) and the base body (3; 67; 87; 107) with at least one geometrically limited rotational degree of freedom and/or at least one geometrically limited linear degree of freedom of movement.

2. Fitting (1; 61; 81; 101) according to claim 1, **characterized in that** the coupling part (20; 62; 82; 102) has, in particular in sections, a first cross-section in a cross-sectional plane (15) aligned transversely to the central axis (4; 71; 86), and that the recess (7; 70; 90; 109) has, in particular in sections, a second cross-section in the cross-sectional plane, wherein the first cross-section and the second cross-section are geometrically similar, wherein in particular the second cross-section is obtained by stretching the first cross-section.

3. Fitting (1; 61; 81) according to any preceding claim, **characterized in that** the clamping ring (17; 73; 89) comprises a cantilever (18) projecting transversely to the central axis (4; 71; 86) in the radial direction, which cantilever (18) is provided at the end with a supporting mandrel (19) extending along the central axis (4; 71; 86).

4. Fitting (1; 61; 81) according to any preceding claim, **characterized in that** the first cam (38) is formed with a wedge-shaped profiling on the outer surface (14; 114), in particular on an arcuate, in particular circular cylindrical, outer surface of the sleeve section (37), which wedge-shaped profiling projects outwards in the radial direction, and that the clamping ring (17; 73; 89) is provided with at least one recess (49) which, in a release position of the clamping ring (17; 73; 89) relative to the base body (3; 67; 87), is designed to receive the first cam (38).

5. Fitting (1; 61; 81; 101) according to any preceding claim, **characterized in that** the coupling part (20; 62; 82; 102) has a guide section (22), in particular being configured as a plane parallel plate, which is arranged between a first axial surface (29) of the base body (3; 67; 87; 107) and a second axial surface (30) of the base body (3; 67; 87; 107), which second axial surface (30) is formed opposite, in particular parallel, to the first axial surface (29), in order to ensure a limitation of relative movements of the coupling part (20; 62; 82; 102) with respect to the base body (3; 67; 87; 107) to linear movements in a movement plane (15) aligned transversely to the central axis (4; 71; 86; 111).

6. Fitting (1; 61; 81; 101) according to any of claims 1 to 4, **characterized in that** the coupling part (82; 102) comprises a first coupling body (83; 103) which is accommodated in the recess (90; 109) such that it can be tiltably moved about at least one axis, in particular about two axes being perpendicular to each other, oriented transverse to the central axis (86; 111) of the base body (87; 107), and a second coupling body (84; 104) which is provided with the threaded portion (23) and which is mounted on the first coupling body (83; 103) such that it can move linearly with respect to the first coupling body (83; 103).

7. Fitting (1; 61; 81; 101) according to any preceding claim, **characterized in that** a region of the recess (7; 70; 90; 109) has a smaller cross-section than the coupling part (20; 62; 82; 102) to provide an undercut for the coupling part (20; 62; 82; 102) which undercut enables a positive transmission of force between the coupling part (20; 62; 82; 102) and the base body (3; 67; 87; 107) along the central axis (4; 71; 86; 111).

8. Fitting (1; 61; 81; 101) according to any preceding claim, **characterized in that** the clamping ring (113) surrounds the outer surface (114) of the base body (107) at least almost entirely, in particular entirely.

9. Fitting (1; 61; 81; 101) according to claim 8, **characterized in that** the outer surface (114) of the base body (107) and an inner surface (115) of the clamping ring (113) are each formed in the shape of cone sections.

10. Fitting (1; 61; 81) according to claim 8 or 9, **characterized in that** a control edge (121) determined by the cam (118) is oriented at an acute angle to an edge (117) of a recess (116) in the clamping ring (113).

## Revendications

1. Pièce de ferrure (1 ; 61 ; 81 ; 101) destinée à fixer un élément fileté sur une section de mur (2), avec un corps de base (3 ; 67 ; 87 ; 107), qui est traversé par un évidement (7 ; 70 ; 90 ; 109), qui s'étend le long d'un axe médian (4 ; 71 ; 86 ; 111), avec une bague de serrage (17 ; 73 ; 89 ; 113), qui est installée de manière mobile en rotation sur une surface extérieure (14 ; 114), en particulier sur une section de manchon (37) disposée de manière coaxiale par rapport à l'axe médian (4 ; 71 ; 86 ; 111), du corps de base (3 ; 67 ; 87 ; 107), dans laquelle une première came de commande (38 ; 118) est associée à la surface extérieure (14 ; 114), en particulier à la section de manchon (37) et/ou dans laquelle une deuxième came de commande est associée à la bague de serrage (17 ; 73 ; 89 ; 113), laquelle est réalisée pour une modification de diamètre élastique ou élastique et plastique de la bague de serrage (17 ; 73 ; 89 ; 113) lors d'un mouvement par rotation de la bague de serrage (17 ; 73 ; 89 ; 113) par rapport au corps de base (3 ; 67 ; 87 ; 107), **caractérisée en ce qu'**une pièce de couplage (20 ; 62 ; 82 ; 102) est logée de manière mobile dans l'évidement (7 ; 70 ; 90 ; 109) et forme, avec le corps de base (3 ; 67 87 ; 107), un couplage par rotation avec un jeu pour une transmission d'un couple de rotation entre la pièce de couplage (20 ; 62 ; 82 ; 102) et le corps de base (3 ; 67 ; 87 ; 107) autour de l'axe médian (4 ; 71 ; 86 ; 111), dans laquelle une section filetée (23) de la pièce de couplage (20 ; 62 ; 82 ; 102) définit un axe de filetage (24 ; 124), qui est orienté avec une orientation variable dans un intervalle angulaire pouvant être spécifié et/ou à un intervalle d'espacement pouvant être spécifié par rapport à l'axe médian (4; 71 ; 86; 111), dans laquelle une zone partielle d'une surface extérieure de la pièce de couplage (20 ; 62 ; 82 ; 102) définit une première section profilée (22), et dans laquelle une zone partielle d'une surface intérieure d'un évidement (7 ; 70 ; 90 ; 109) définit une deuxième section profilée (9), dans laquelle la première section profilée (22) forme avec la deuxième section profilée (9) dans une position fonctionnelle un couplage par rotation avec un jeu pour une transmission de couple de rotation entre la pièce de couplage (20 ; 62 ; 82 ; 102) et le corps de base (3 ; 67 ; 87 ; 107) et/ou est réalisée dans une position de libération pour un mouvement relatif entre la pièce de couplage (20 ; 62 ; 82 ; 102) et le corps de base (3 ; 67 ; 87 ; 107) avec au moins un degré de liberté de mouvement par rotation limité géométriquement et/ou un degré de liberté de mouvement linéaire délimité géométriquement.

2. Pièce de ferrure (1 ; 61 ; 81 ; 101) selon la revendication 1,
**caractérisée en ce que** la pièce de couplage (20 ; 62 ; 82 ; 102) présente une première section transversale, en particulier par endroits, dans un plan de section transversale (15) orienté de manière transversale par rapport à l'axe médian (4 ; 71, 86), et que l'évidement (7 ; 70 ; 90 ; 109) présente une deuxième section transversale, en particulier par endroits, dans le plan de section transversale, dans laquelle la première section transversale et la deuxième section transversale sont réalisées de manière similaire géométriquement, en particulier la deuxième section transversale fait saillie de la première section transversale par étirement.

3. Pièce de ferrure (1 ; 61 ; 81) selon l'une quelconque des revendications précédentes, **caractérisée en ce que** la bague de serrage (17 ; 73 ; 89) comprend un bras (18) dépassant dans une direction radiale de manière transversale par rapport à l'axe médian (4 ; 71 ; 86), qui est pourvu côté extrémité d'un mandrin de support (19) s'étendant le long de l'axe médian (4 ; 71 ; 86).

4. Pièce de ferrure (1 ; 61 ; 81) selon l'une quelconque des revendications précédentes, **caractérisée en ce que** la première came de commande (38) est réalisée sur la surface extérieure (14; 114), de préférence sur une face extérieure arquée, en particulier cylindrique circulaire, de la section de manchon (37), avec un profilage en forme de coin, qui dépasse vers l'extérieur dans une direction radiale, et que la bague de serrage (17 ; 73 ; 89) est pourvue d'au moins un évidement (49), qui est réalisé pour loger la première came de commande (38) dans une position de libération de la bague de serrage (17 ; 73 ; 89) par rapport au corps de base (3 ; 67 ; 87).

5. Pièce de ferrure (1 ; 61 ; 81 ; 101) selon l'une quelconque des revendications précédentes, **caractérisée en ce que** la pièce de couplage (20 ; 62 ; 82 ; 102) présente une section de guidage (22) réalisée en particulier en tant que plaque plane parallèle, qui est logée entre une première face axiale (29) du corps de base (3 ; 67 ; 87 ; 107) et une deuxième face axiale (30) du corps de base (3 ; 67 ; 87 ; 107), qui est réalisée en vis-à-vis, en particulier de manière parallèle, par rapport à la première face axiale (29) pour garantir une limitation de mouvements relatifs de la pièce de couplage (20 ; 62 ; 82 ; 102) par rapport au corps de base (3 ; 67 ; 87 ; 107) à des mouvements linéaires dans un plan de mouvement (15) orienté de manière transversale par rapport à l'axe médian (4 ; 71 ; 86 ; 111).

6. Pièce de ferrure (1 ; 61 ; 81 ; 101) selon l'une quelconque des revendications 1 à 4,
**caractérisée en ce que** la pièce de couplage (82 ; 102) comprend un premier corps de couplage (83 ; 103), qui est logé dans l'évidement (90 ; 109) de manière mobile par basculement autour d'au moins un, en particulier autour de deux axes de basculement orientés de manière perpendiculaire l'un par rapport à l'autre, de manière transversale par rapport à l'axe médian (86 ; 111) du corps de base (87 ; 107), et comprend un deuxième corps de couplage (84 ; 104), qui est pourvu de la section filetée (23) et qui est monté de manière mobile linéairement sur le premier corps de couplage (83 ; 103).

7. Pièce de ferrure (1 ; 61 ; 81 ; 101) selon l'une quelconque des revendications précédentes, **caractérisée en ce que** l'évidement (7 ; 70 ; 90 ; 109) présente par endroits une section transversale inférieure à celle de la pièce de couplage (20 ; 62 ; 82 ; 102) et une contre-dépouille ainsi formée pour la pièce de couplage (20; 62; 82; 102) garantit une transmission de force par complémentarité de forme entre la pièce de couplage (20 ; 62 ; 82 ; 102) et le corps de base (3 ; 67 ; 87 ; 107) le long de l'axe médian (4 ; 71 ; 86 ; 111).

8. Pièce de ferrure (1 ; 61 ; 81) selon l'une quelconque des revendications précédentes, **caractérisée en ce que** la bague de serrage (113) entoure au moins quasiment totalement, en particulier totalement, la surface extérieure (114) du corps de base (107).

9. Pièce de ferrure (1 ; 61 ; 81) selon la revendication 8,
**caractérisée en ce que** la surface extérieure (114) du corps de base (107) et une surface intérieure (115) de la bague de serrage (113) sont réalisées respectivement en forme de section conique.

10. Pièce de ferrure (1 ; 61 ; 81) selon la revendication 8 ou 9,
**caractérisée en ce qu'**une arête de commande (121) définie par la came de commande (118) est orientée selon un angle aigu par rapport à une arête (117) d'un évidement (116) dans la bague de serrage (113).
